# EUROPÄISCHE PATENTSCHRIFT

(11) **EP 2 340 683 B1**
(45) Veröffentlichungstag und Bekanntmachung des Hinweises auf die Patenterteilung: **28.11.2012**
(21) Anmeldenummer: 09740861.1
(22) Anmeldetag: 22.10.2009
(51) Int. Cl.: H04W 88/08

(54) **ABGESETZTE ANTENNENANLAGE FÜR MEHRERE BASISSTATIONEN, DIE SICH EINE EINZIGE HF-SPEISELEITUNG TEILEN ZUR ÜBERTRAGUNG DER HF-, KONTROLL- UND ÜBERWACHUNGSSIGNALE SOWIE DER VERSORGUNGSGLEICHSPANNUNG**
REMOTE ANTENNA INSTALLATION FOR A PLURALITY OF BASE STATIONS SHARING A SINGLE HF SUPPLY LINE FOR TRANSMITTING HF, CONTROL AND MONITORING SIGNALS AND THE SUPPLY DIRECT VOLTAGE
INSTALLATION D'ANTENNE À DISTANCE POUR PLUSIEURS STATIONS DE BASE SE PARTAGEANT UNE SEULE LIGNE D'ALIMENTATION HF POUR LA TRANSMISSION DES SIGNAUX DE HAUTE FREQUENCE, DE COMMANDE ET DE SURVEILLANCE AINSI QUE DE LA TENSION CONTINUE D'ALIMENTATION

(30) Priorität: 30.10.2008 DE 102008053850; 26.03.2009 DE 102009015050
(43) Veröffentlichungstag der Anmeldung: 06.07.2011
(73) Patentinhaber: Kathrein-Werke KG, 83022 Rosenheim (DE)
(72) Erfinder: SEEOR, Alexander, 83059 Kobermoor (DE); MOHR, Markus, 83022 Rosenheim (DE); GABRIEL, Roland, 83556 Griesstätt (DE)
(74) Vertreter: Flach, Dieter Rolf Paul
(86) Internationale Anmeldenummer: PCT/EP2009/007574
(87) Internationale Veröffentlichungsnummer: WO 2010/049094

(56) Entgegenhaltungen:
- EP-A- 1 085 773
- US-A1- 2002 132 644
- US-B1- 6 618 599

## Beschreibung

Die Erfindung betrifft eine Antennenanlage, insbesondere eine Mobilfunk-Antennenanlage sowie eine zugehörige Übertragungs- und Steuerungseinrichtung.

Mobilfunkantennen können in einem oder in mehreren Frequenzbändern strahlen und/oder empfangen, beispielsweise in einem 900 MHz-Band, in einem 1800 MHz-Band, in einem 1900 MHz-Band, oder z.B. in einem UMTS-Band, beispielsweise also in einem Bereich von ca. 1920 MHz bis 2170 MHz. Beschränkungen auf andere Frequenzbereiche liegen grundsätzlich nicht vor.

Bewährte Mobilfunkantennen arbeiten dabei mit Strahlern oder Strahlereinrichtungen, die beispielsweise in zwei senkrecht zueinander stehenden Polarisationen senden und/oder empfangen können. Es wird insoweit häufig auch von einer X-Polarisation gesprochen, da die beiden Polarisationsebenen vom Grundsatz her in einem +45° Winkel bzw. einem -45° Winkel gegenüber der Horizontalebene oder Vertikalebene ausgerichtet sind. Unabhängig davon können die Mobilfunkantennen häufig in ihrer Hauptstrahlrichtung in einem von einer Horizontalausrichtung abweichenden Abstrahlwinkel eingestellt werden, der vorzugsweise fernsteuerbar veränderbar ist. Es wird hier von einer fernsteuerbaren elektronischen Down-Tilt-Winkeleinstellung und einer zugehörigen Einstelleinrichtung gesprochen, die häufig kurz auch als RET-Einheit bezeichnet wird.

Ein derartiges Steuergerät ist beispielsweise aus der EP 1 356 539 B1 sowie ein zugehöriges Verfahren zum Betrieb einer derartigen RET-Einheit beispielsweise aus der EP 1 455 413 B1 als bekannt zu entnehmen.

Unabhängig von dem Aufbau der Antennenanlagen im Bereich einer Basisstation ist es erforderlich, dass die entsprechenden Antennenanlagen miteinander synchronisiert werden.

Gemäß den meisten Mobilfunkstandards wird die Synchronisation der Basisstation über ein Netzwerk- und Vermittlungssystem sichergestellt, welches auch als "Network and Switching System", kurz als "NSS" bezeichnet wird, welches zudem auch als Backbone-Netzwerk bekannt ist.

Satellitensignale sind hier nicht erforderlich, da die Synchronisation der Teilnehmer in dem jeweiligen Verbindungskanal erfolgt. Die grundlegenden Eigenschaften eines derartigen Mobilfunksystems sind beispielsweise in P. Jung: Analyse und Entwurf digitaler Mobilfunksysteme, Verlag Teubner, Stuttgart, 1997, S. 231-240 wiedergegeben.

Vor diesem Hintergrund erfolgt die ständige Ausweitung des Mobilfunknetzes auch unter Bereitstellung neuer Mobilfunkanlagen, ggf. auch an einem gleichen Standort, insbesondere an einem gleichen Mast. Dies führt zur Verdopplung, Verdreifachung etc. einer Basisstation, d.h. z.B. zur Verdopplung der über die Basisstation angesteuerten Antennen sowie zu einer Verdopplung der zwischen der Basisstation und der Antenne verlaufenden HF-Speiseleitungen, der zugehörigen elektronischen Komponenten zum Betrieb einer Anlage beispielsweise in Form von stromalarmierten Geräten (nachfolgend auch teilweise kurz als CWA-Geräte bezeichnet, wobei die Abkürzung "CWA-" für "Current Window Alarm" steht). Neuere Antennenanlagen sind dabei beispielsweise auch mit der sog. AISG-Gerätefunktionalität ausgestattet (wobei AISG für "Antenna Interface Standards Group" steht). Daneben sind auch Antennenanlagen z.B. mit einer 3GPP-Gerätefunktionalität ausgestattet, die eine Kommunikation nicht über das AISG-Protokoll sondern über das 3GPP-Protokoll erlaubt (wobei "3GPP" für "3^{rd} Generation Partnership Projekt" steht).

Um hier zu einer gewissen Vereinfachung zu gelangen, ist es ebenfalls bekannt, bei Erweiterung einer Mobilfunkanlage durch Hinzufügen einer zweiten Antennenanlage und einer zweiten Basisstation die Speiseleitung zwischen der Basisstation und den Antennen so weit als möglich gemeinsam zu nützen (Feeder-Sharing). Gegebenenfalls sind noch separate Gleichstrom-Versorgungs- und Stromalarmierungs-Leitungen zu den HF-Speiseleitungen notwendig.

US 2002/132 644 A1 beschreibt ein Verfahren und eine Vorrichtung zum Übertragen eines Kommunikationssignals zwischen einer Funkbasisstation und einem Antennenelement. Dabei wird von einem basisstationseitigen Multiplexer ein Eingangssignal empfangen, von dem ein Datensignal extrahiert wird, wobei das Datensignal Werte enthält, die Betriebsparameter der Vorrichtungen an dem Antennenelement repräsentieren, und es wird ein Statussignal für jede Vorrichtung erzeugt, das ein Rückkoppelsignal für diese Vorrichtung simuliert.

US 6,618,599 B1 beschreibt eine basisstationsseitige Transceiver Station eines digitalen Mobilfunkkommunikationssystem, umfassend eine basisstationsseitige Haupttransceiver-Stationsvorrichtung (Master-BTS-Vorrichtung) und eine Vielzahl von davon entfernten Funkfrequenzeinheiten, die von der Master-BTS-Vorrichtung getrennt sind und von dieser entfernt installiert sind zum Bearbeiten von Funkfrequenzsignalen.

EP 1 085 773 A beschreibt ein Telekommunikationsnetzwerk, in dem eine Vielzahl von Funkstationen über einen Konzentrator eingebunden sind. Der Konzentrator beinhaltet einen digitalen Signalprozessor, der die Kanalcodierung durchführt. Die Funkstationen modulieren die codierten Signale, die von dem Konzentrator über LAN/WAN übertragen werden.

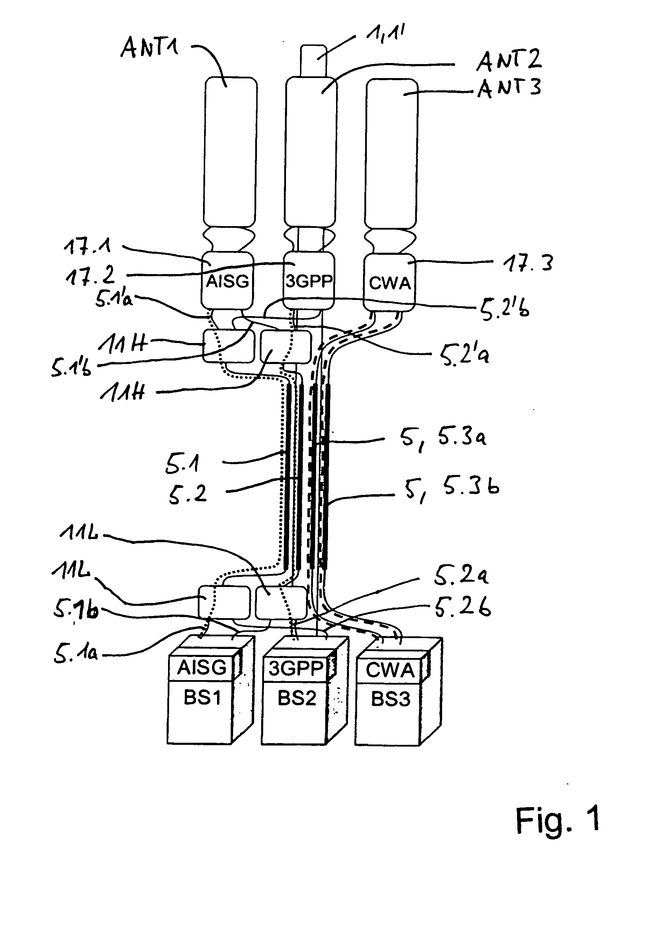

Durch eine der vorstehend erwähnten Erweiterungen können komplexe oder Hybrid-Antennenstrukturen entstehen, wobei diese beispielsweise anhand von Figur 1 für den Stand der Technik dargestellt ist.

Bei der nach dem Stand der Technik bekannten Antennenanlage gemäß Figur 1 sind beispielsweise an einem Montageort 1 beispielsweise in Form eines Mastes 1' (oder an einem Gehäuse oder Gebäude etc.) drei Antenneneinrichtungen montiert nämlich eine erste Antenneneinrichtung ANT1, eine zweite Antenneneinrichtung ANT2 und eine dritte Antenneneinrichtung ANT3, die wie eingangs geschildert mit geeigneten Strahlern, beispielsweise X-polarisierten Strahlern, ausgestattet sein kann, um in zwei Polarisationen zu senden und/oder zu empfangen.

Jede der drei Antenneneinrichtungen ANT1 bis ANT3 sind drei Basisstationen BS1 bis BS3 zugeordnet.

Die Basisstation BS3 kann beispielsweise eine herkömmliche Basisstation darstellen, die die dritte Antenneneinrichtung ANT3 steuert und speist. Der Betrieb der Antenneneinrichtung wird gemäß dieser Ausführungsform nicht über ein Protokoll gesteuert durchgeführt, sondern mittels einer "Stromalarmierung", also mittels einer CWA-Logik bzw. CWA-Geräte, die in Abhängigkeit von Fehler- und/oder Status-änderungen unterschiedliche Ströme ziehen, was eine entsprechende Steuerung der Komponenten erlaubt. Dazu ist die dritte Basisstation BS3 mit der CWA-Logik bzw. CWA-Steuereinrichtungen ausgestattet, beispielsweise über zwei HF-/DC-Speiseleitungen 5.3a und 5.3b, die mit einer antennenseitigen CWA-Geräteeinheit 17.3 in Verbindung stehen, die der zugehörigen Antenneneinrichtung ANT3 vorgeschaltet ist, so dass über HF-/DC-Verbindungsleitungen 5.3a und 5.3b die zur Antenneneinrichtung ANT3 gehörigen Strahler entsprechend für den Betrieb der Antennenanlage angesteuert werden können.

Das nach dem Stand der Technik bekannte Beispiel nach Figur 1 kann dadurch entstanden sein, dass beispielsweise die vorstehend genannte Basisstation BS3 mit der zugehörigen Antennenanordnung ANT3 und den stromalarmierten Antennen-Komponenten 17.3 um eine weitere ebenfalls aus dem Stand der Technik bekannte Antennenanlage mit einer Antenneneinrichtung ANT1 und einer zugehörigen Basisstation BS1 sowie einer zugehörigen Mobilfunkkomponente 17.1 erweitert wurden, wobei diese hinzugekommene Antennenanlage beispielsweise mit der Gerätefunktionalität AISG ausgestattet ist, also eine Kommunikation über das AISG-Protokoll zwischen der Basisstation BS1 und der antennenseitigen Mobilfunkkomponente 17.1 durchführbar ist.

Gemäß dem nach dem Stand der Technik bekannten und in Figur 1 wiedergegebenen Beispiel ist eine dritte Basisstation BS2 zusätzlich nachgerüstet worden, die beispielsweise mit der 3GPP-Gerätefunktionalität ausgestattet ist, die eine Kommunikation über das 3GPP-Protokoll erlaubt. Eine entsprechende Schnittstelleneinheit ist an der Basisstation BS2 vorgesehen. Ferner ist antennennah zur zugehörigen Antenneneinrichtung ANT2 (also in der Regel oben am Mast) die 3GPP-Steuerungs- oder Mobilfunkkomponente 17.2 vorgesehen.

Um die insgesamt benötigten Speiseleitungen 5 zu reduzieren, können diese teilweise gemeinsam genutzt werden. Im selben Ausführungsbeispiel sind neben den beiden Speiseleitungen 5.3a und 5.3b für den Betrieb der Antennenanlage ANT3 noch zwei weitere Basis-Speiseleitungen 5.1 und 5.2 vorgesehen, die von der Antennenanlage ANT1 und ANT2 gemeinsam benutzt werden. Dazu sind den beiden Basisstationen BS1 und BS2 zwei Diplexer 11 zugeordnet, wobei jeweils die beiden Ausgangs- bzw. Basis-Speiseleitungen 5.1a und 5.1b bzw. 5.2a und 5.2b sowohl bezüglich der ersten Basisstation BS1 und der zweiten Basisstation BS2 über die beiden Diplexer 11L geführt sind, so dass die hier benötigten zusätzlichen Speiseleitungen von vier auf zwei reduziert werden können. Ebenso muss durch zwei Diplexer 11H, die in der Regel an der oberen Seite des Mastes 1' antennennah vorgesehen sind, wiederum eine Aufspaltung auf die beiden Antennenanlagen ANT1 und ANT2 vorgenommen werden, um die HF-Signale zum Senden bzw. Empfangen den einzelnen Antennenanlagen richtig zuzuordnen.

Ferner ist in Figur 1 noch angedeutet, dass beispielsweise von der ersten sowie der zweiten Basisstation BS1 bzw. BS2 jeweils über die eine Basis-Speiseleitungen 5.1a bzw. 5.2a eine Gleichstromversorgung sowie das AISG bzw. das 3GPP-Protokoll in die jeweilige Speiseleitung 5.1 bzw. 5.2 über den jeweils zugeordneten basisstationsseitigen Diplexer 11L eingespeist und über die antennenseitigen Diplexer 11H und die nachfolgenden Antennen-Speiseleitungen 5.1'a und 5.2'a den Mobilfunk-Komponenten 17.1 bzw. 17.2 zugeführt wird. Diese Gleichstromübertragung sowie die Übertragung des AISG- bzw. 3GPP-Protokolls ist in Figur 1 punktiert angedeutet, wobei die HF-Speiseleitung zwischen der Basis und der Antenne grundsätzlich in dicken Linien wiedergegeben ist.

Figur 1 zeigt dabei auch, dass die beiden Speiseleitungen 5.3a und 5.3b auch zur Gleichstromversorgung insbesondere für die stromalarmierten Geräte dienen. Diese Gleichstromübertragung ist in der Figur 1 strichliert dargestellt.

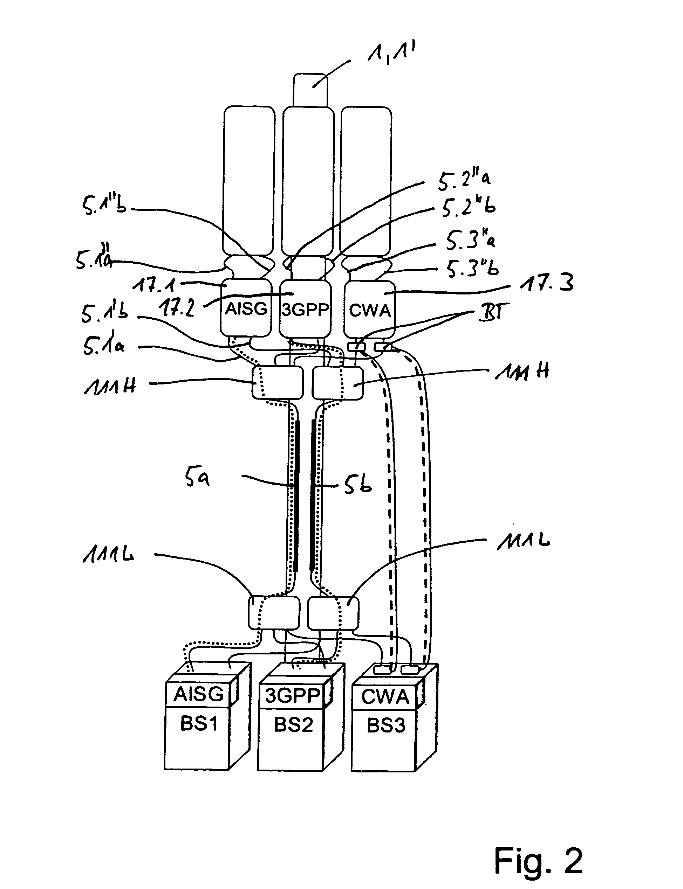

Die Nutzung der gemeinsamen Speiseleitungen 5 kann noch weiter verbessert und optimiert werden, wie dies beispielsweise anhand von Figur 2 für eine weitere Gesamt-Antennenanlage dargestellt ist. Dort werden basisstationsseitig nunmehr zwei Triplexer 111L vorgesehen, die jeweils mit drei basisstationsseitigen Anschlüssen verbunden sind, wobei jeweils ein Anschluss der beiden Triplexer 111L mit jeweils einem Anschluss der zugehörigen Basisstation BS1, BS2 bzw. BS3 verbunden ist. Mit anderen Worten ist jeweils ein erster Anschluss der drei Basisstationen BS1 bis BS3 mit dem einen Triplexer 111L und jeweils ein zweiter Anschluss der drei Basisstationen BS1 bis BS3 mit einem Eingang des zweiten Triplexers 111L verbunden. Die beiden Triplexer haben antennenseitig jeweils einen Anschluss, der mit jeweils einer der beiden Speiseleitungen 5a bzw. 5b verbunden ist.

Antennenseitig ist der Aufbau quasi symmetrisch wiedergegeben, wobei über zwei weitere Triplexer 111H nunmehr die über die beiden einzelnen Speiseleitungen 5a, 5b zugeführten HF-Signalen über die jeweils drei Anschlüsse der beiden Triplexer 111H entsprechend aufgespalten und den drei Antennenanlagen ANT1 bis ANT3 zugeführt werden. Somit sind die drei Ausgänge des ersten Triplexers 111H mit drei Eingängen der Mobilfunk-Komponenten 17.1, 17.2 und 17.3 verbunden, wobei die drei Ausgänge des zweiten Triplexers 111H an den jeweils zweiten Anschlüssen an den Mobilfunk-Komponenten 17.1, 17.2 und 17.3 angeschlossen sind. Dadurch stehen jeweils die beiden entsprechenden HF-Signale an den Mobilfunk-Komponenten 17.1 bis 17.3 an und können über die Verbindungsleitungen 5.1"a, 5.1"b zur Antenne ANT1, über die Verbindungsleitungen 5.2"a und 5.2"b zur zweiten Antenne ANT2 und über die beiden Verbindungsleitungen 5.3"a und 5.3"b zur dritten Antenneneinrichtung ANT3 übertragen werden.

Somit werden die drei Antennenanlagen ANT1 bis ANT3 mittels dem AISG- und/oder dem 3GPP-Protokoll bzw. über die CWA-Stromalarmierung (ohne Verwendung eines Protokolles) gesteuert.

Bezüglich der Antennenanlage ANT3 sind Basisstations- wie antennenseitig jeweils noch sogenannte Bias Tee-Geräte BT vorgesehen (also Geräte zur HF-transparenten Gleichstrom-Ein- bzw. Auskopplung), um hier die CWA-Komponenten zum einen mit Gleichstrom zu versorgen und andererseits zu ermöglichen, dass die antennenseitig vorgesehenen CWA-Geräte bzw. Steuerungskomponenten 17.3 unterschiedliche Ströme in Abhängigkeit von Fehler- und unter Status-Änderungen ziehen können, die dann an der Basisstation entsprechend ausgewertet werden können.

Mit anderen Worten sind also bei den Antennenanlagen ANT1 bis ANT3 beispielsweise am Mast 1', an einer Wand 1 eines Gebäudes etc. montierte Mobilfunkkomponenten 17 vorgesehen, wie beispielsweise TMA-Verstärker (sogenannte rauscharme "Tower Mounted Amplifier" Empfangsverstärker) und/oder RET-Einheiten zur fernsteuerbaren Einstellung des Absenk-; also des Abstrahlwinkels der Antennen, kurz auch Down-Tilt-Winkel genannt etc.

So könnte in Abweichung zu den Figuren 1 und 2 daran gedacht werden, die Anzahl der im Stand der Technik benötigten Speiseleitungen auch aus Kostengründen zu reduzieren.

Bei bekannten Anlagen wie anhand von Figur 1 und Figur 2 erläutert, würde dann aber das Problem auftreten, dass nicht klar ist, welche Basisstation BS1 bis BS3 tatsächlich eine entsprechende ALD-Mobilfunkkomponente mit Gleichspannung (DC-Spannung) versorgt. In der Regel kann nämlich eine Basisstation nicht die gesamte GleichstromLeistung für alle ALD-Mobilfunk-Komponenten bereitstellen, und/oder abdecken, die beispielsweise einer anderen Basisstation zugeordnet sind.

Wenn unterschiedliche Gleichstrom-Versorgungsspannungen durch mehrere, parallel geschaltete Basisstationen bereit gestellt werden, würde dies ebenfalls ein Problem darstellen, wenn hierüber die ALD-Mobilfunkkomponenten über eine gemeinsame HF-Speisestrecke gespeist werden sollen.

Schließlich können auch ältere sogenannte stromalarmierte CWA-Komponenten bei einer weiteren Reduzierung der Speiseleitungen in den anhand von Figur 1 und Figur 2 erläuterten Komplexen, d. h. kombinierten Mobilfunkanlagen, ein weiteres Problem darstellen. Denn die Verwendung derartiger stromalarmierter (CWA) ALD-Geräte bzw. Mobilfunkkomponenten zieht in Abhängigkeit von Fehler- und/oder Status-Änderungen unterschiedliche Ströme, welche die entsprechende Basisstation überwacht und auswerten muss, um in Abhängigkeit davon Status- und Fehler-Änderungen an übergeordnete Systeme weiterzuleiten. Durch die DC-Zusammenschaltung verschiedener ALD-Mobilfunkkomponenten über einen gemeinsamen Feeder, also gemeinsame Speiseleitungen, können die Ströme einzelner ALD-Mobilfunkkomponenten auf der Basisstationsseite nicht mehr getrennt werden. Somit ist gerade bei einer Antennenanlage mit CWA-Systemen eine korrekte Alarmierung und/oder Anzeige eventueller Status-änderungen nicht mehr gewährleistet.

Bei der erläuterten Kombination von älteren stromalarmierten (CWA-)Systemen und neueren Systemen, bei denen die Alarmierung und/oder Steuerung zum Beispiel über das AISG- oder das 3GPP-Protokoll erfolgt, können aber (wenn diese Anlagen über eine gemeinsame Feeder-Speise-Struktur gespeist werden) noch weitere Probleme auftreten. Dies führt nämlich unter Umständen zu Inkompatibilitäten auf einer gemeinsamen Speiseleitung, wenn nämlich unterschiedliche, unabhängig voneinander eingesetzte Protokolle (unterschiedliche "Primaries") eingesetzt werden. Mit anderen Worten kann es zu Datenkollisionen auf dem Datenbus kommen, die einen korrekten Betrieb der gesamten Antennenanlage im Rahmen einer gemischten Antennenstruktur wie erläutert nicht erlaubt. Es kann nämlich passieren, dass beispielsweise AISG- oder 3GPP-Protokoll-Signale oder gegebenenfalls zusätzliche kundenspezifische Protokolle durch CWA-ALD-Komponenten kurzgeschlossen werden (und zwar unterschiedlich in Abhängigkeit der diversen stromalarmierten ALD-Komponenten), wodurch eine korrekte Datenkommunikation völlig zum Erliegen kommen kann.

Aufgabe der vorliegenden Erfindung ist es von daher, eine verbesserte komplexe Antennenanlage sowie die hierfür benötigte zentrale Übertragungs- und Steuerungseinrichtung zu schaffen, die den Betrieb mehrerer einzelner Antennenanlagen mit zugehörigen Basisstationen (also zur Übertragung unterschiedlicher Frequenzbänder) in einer "gemischten" Umgebung unter Einsatz unterschiedlicher Komponenten erlaubt.

Die Aufgabe wird erfindungsgemäß bezüglich der wesentlichen zentralen Übertragungs- und Steuerungseinrichtung entsprechend den im Anspruch 1 bzw. 8 und bezüglich einer Antennenanlage, insbesondere Mobilfunkantennenanlage unter Verwendung der vorstehend genannten erfindungsgemäßen Übertragung- und Steuerungseinrichtung, entsprechend Anspruch 20 gelöst. Vorteilhafte Ausgestaltungen der Erfindung sind in den Unteransprüchen angegeben.

Die erfindungsgemäße Lösung basiert darauf, dass basisstationsseitig und darüber hinaus antennenseitig jeweils ein

Multiplexer (MUX), also eine Multiplexer-Schaltung, eingesetzt wird, die nachfolgend teilweise auch kurz als MUX bezeichnet wird.

Es handelt sich dabei um eine sogenannte "intelligente" Multiplexer-Schaltung, die je nach Anforderung in Form eines Diplexers, Triplexers, also allgemein in Form eines Multiplexers konzipiert sein kann, je nachdem wie viele Basisstationen und zugehörige Antenneneinrichtungen gemeinschaftlich unter Ausnützung einer gemeinsamen Feeder-Struktur (gemeinsame Speiseleitungs-Struktur) eingesetzt werden sollen.

Die Multiplex-Struktur auf der Basisstations-Seite scannt dabei auf der den Basisstationen zugeordneten Anschlussseiten, ob von der betreffenden Basisstation beispielsweise ein oder mehrere AISG-Protokolle, ein oder mehrere 3GPP-Protokolle und/oder gegebenenfalls nur ein oder mehrere Gleichstromsignale (DC-Signal) ohne ein entsprechendes Protokoll übertragen wird, wobei im zuletzt genannten Falle es sich dann um eine stromalarmierte (CWA) Gerätesteuerung oder gegebenenfalls um eine Gerätesteuerung handeln würde, die nur durch Kommunikation der antennenseitigen Mobilfunkkomponenten von diesen zur Basisstation hin gegeben ist (wobei alternativ oder ergänzend auch eine Gerätesteuerung vorliegen kann, bei der die Kommunikation zwischen den antennenseitigen Mobilfunkkomponenten und der Basisstation beispielsweise von der Basisstation aus initiiert und durchgeführt wird). Das entsprechende Abtast-Ergebnis wird dann über eine geeignete Protokollierung über die gemeinsame Feeder-Struktur zu den Antenneneinrichtungen übertragen, d.h. zu den den Antenneneinrichtungen vorgeschalteten antennenseitigen Multiplex-Schaltungen. Hierüber erfolgt wiederum eine Rück-Übertragung (Rück-Übersetzung) beispielsweise zu einem AISG-Protokoll oder einem 3GPP-Protokoll oder einer Bereitstellung eines reinen Gleichstromsignals, so als ob von der betreffenden Basisstation auf getrenntem Wege ein AISG-Protokoll, ein 3GPP-Protokoll oder ein beliebiges anderes Protokoll (beispielsweise ein proprietäres Protokoll) übertragen worden wäre oder eine entsprechende Antennensteuerung nur über stromalarmierte Geräte (CWA) oder Geräte erfolgen würde, die nur von der Antennenseite aus zur Basisstationsseite kommunizieren. Mit anderen Worten werden die zwischen der basisstationsseitigen und der antennenseitigen Multiplex-Schaltung ausgetauschten und/oder übertragenen Protokolle zuordnungsrichtig den entsprechenden Antenneneinrichtungen bzw. Basisstationen zugeführt.

Die antennenseitige Multiplexer-Schaltung überprüft, ob Verbraucher an ihren antennenseitigen Ausgängen angeschlossen sind, misst gegebenenfalls deren Stromaufnahme und kommuniziert dieses Ergebnis an die basisstationsseitige Multiplex-Schaltung. Somit ist auch eine entsprechende Bereitstellung einer Gleichstromleistung für die CWA-Geräte genau in jener Größenordnung möglich, wie beispielsweise bei Verwendung einer älteren Basisstation in betreffender Höhe in eine HF-Speiseleitung eingespeist werden würde.

Dadurch lässt sich der jeweilige erforderliche Gleichstrom genau einstellen und eine entsprechende Gleichstromversorgung der zugehörigen Antenneneinheiten an den basisstationsseitigen Anschlüssen der basisstationsseitigen Multiplexer-Schaltung simulieren.

Letztlich lässt sich im Rahmen der Erfindung eine Zusammenschaltung unterschiedlicher Gleichstrom-Spannungsquellen an den Basisstationen realisieren, wobei ferner eine galvanische Trennung zwischen den basisstationsseitigen Anschlüssen des Muliplexers von den antennenseitigen Anschlüssen des Multiplexers vorgenommen wird. Dadurch ist es möglich, dass der basisstationsseitige Multiplexer Leistungsaufnahmen an den entsprechenden, für die Verbindung zur Basisstation vorgesehenen Eingängen simulieren kann, die den Zuständen (z.B. die entsprechende Leistungsaufnahme in einem Betriebs- oder Fehlerzustand) an den der jeweiligen Basisstation zugeordneten ALD-Komponenten entsprechen (entweder fest eingestellt und/oder beispielsweise: voll konfigurierbar).

In einer bevorzugten Ausführungsform der Erfindung ist noch eine weitere separate Schnittstelle an dem betreffenden Multiplexer zur Verfügung gestellt, die entweder zur Ansteuerung des Multiplexers und/oder einer darüber erreichbaren Antenneneinrichtung und/oder zur Bereitstellung von Gleichstrom verwendet werden kann.

Diese erwähnte zusätzliche Schnittstelle an dem Multiplexer kann bei einer ausreichenden Gleichstrom-Gesamtleistung an den basisstationsseitigen Anschlüssen auch weggelassen werden.

Weitere Vorteile, Einzelheiten und Merkmale der Erfindung ergeben sich aus den anhand von Zeichnungen beigefügten Ausführungsbeispielen. Dabei zeigen im einzelnen
- Figur 1 :: ein erstes schematisches Ausführungsbeispiel einer Mobilfunkanlage mit drei Basisstationen und drei zugehörigen Antenneneinrichtungen nach dem Stand der Technik;
- Figur 2 :: ein abgewandeltes Ausführungsbeispiel zu Figur 1, wie es ebenfalls nach dem Stand der Technik bekannt ist,
- Figur 3 :: ein erstes erfindungsgemäßes Ausführungsbeispiel einer erfindungsgemäßen Antennenanlage unter Verwendung von zwei unterschiedlich arbeitenden Basisstationen;
- Figur 4a:: ein zweites erfindungsgemäßes Ausführungsbeispiel einer erfindungsgemäßen Antennenanlage unter Verwendung von drei unterschiedlich arbeitenden Basisstationen;
- Figur 4b:: ein drittes erfindungsgemäßes Ausführungsbeispiel einer Antennenanlage unter Verwendung von drei unterschiedlich arbeitenden Basisstationen;
- Figur 5a:: eine schematische Darstellung eines erfindungsgemäßen Multiplexers (Triplexers) zur Erläuterung der integrierten Scaneinrichtung zur Abfrage der Multi-Anschlüsse, die zu den diversen Basisstationen führen;
- Figur 5b:: zur Verdeutlichung einer Durchschaltung einer Schnittstelle (die eine Verbindung zu einer von mehreren Basisstationen darstellt) zu den antennenseitigen Komponenten nach Feststellung, an welcher Schnittstelle ein HDLC-Protokoll-Signal anliegt;
- Figur 5c:: eine schematische Darstellung einer Durchschaltung einer Schnittstelle (die eine Verbindung zu einer von mehreren Basisstationen darstellt) zu den antennenseitigen Komponenten nach dem Verbindungsaufbau mit diesen über ein HDLC-Protokoll-Signal;
- Figur 5d:: eine Darstellung zur Verdeutlichung der Durchschaltung zweier Schnittstellen (die eine Verbindung zu den entsprechenden Basisstationen darstellen) zu den entsprechenden antennenseitigen Komponenten nach einem Verbindungsaufbau mit diesen über zwei eventuell unterschiedliche HDLC-Protokoll-Signale (z. B. AISG und 3GPP);
- Figur 6a:: eine weitere schematische Darstellung zur Erläuterung eines erfindungsgemäßen antennennahen Multiplexers (Triplexers), der die Kommunikation zwischen der HF-Speisestrecke und der einer entsprechenden Basisstation zugehörigen Antenneneinrichtung ermöglicht, und zwar nach einem Verbindungsaufbau über ein HDLC-Protokoll-Signal;
- Figur 6b:: eine Darstellung zur Verdeutlichung eines erfindungsgemäßen antennennahen Multiplexers (Triplexers), der über zwei Schnittstellen die Kommunikation zu den entsprechenden antennenseitigen Komponenten ermöglicht, und zwar nach einem Verbindungsaufbau mit diesen über zwei eventuell jeweils unterschiedliche HDLC-Protokoll-Signale; und
- Figur 7:: ein zu Figuren 6a und 6b abweichendes Ausführungsbeispiel eines erfindungsgemäßen Multiplexers.

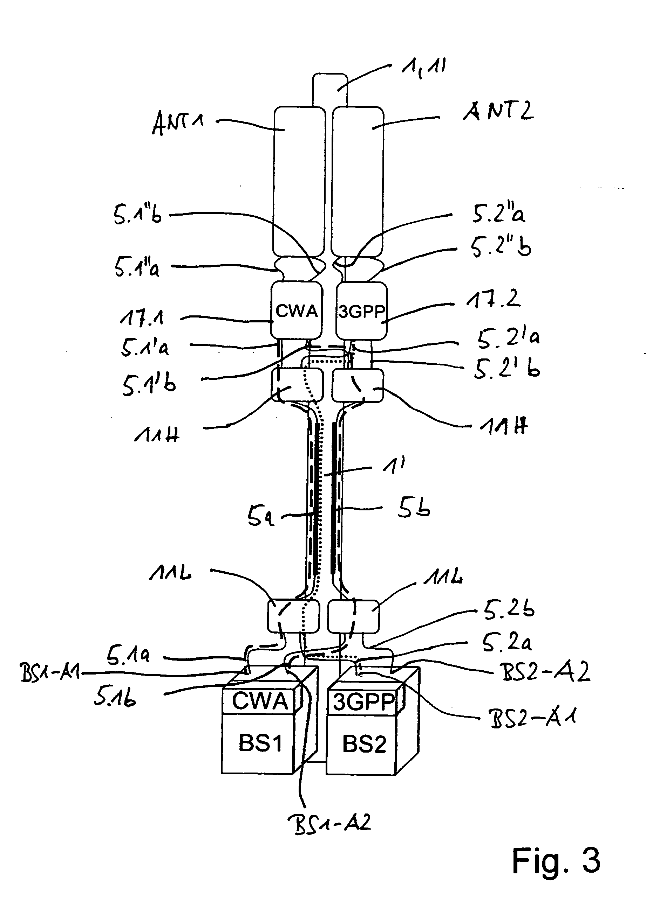

Nachfolgend wird auf Figur 3 Bezug genommen.

Anhand von Figur 3 ist ein erstes erfindungsgemäßes Ausführungsbeispiel für zwei Antennensysteme mit einer ersten Antenneneinrichtung ANT1 und einer zweiten Antenneneinrichtung ANT2 gezeigt, von denen in Figur 3 im Wesentlichen nur das Radom zu ersehen ist, unterhalb dessen die in der Regel beispielsweise in einem, zwei oder in mehreren Frequenzbändern strahlenden Strahlereinrichtungen vorgesehen sind. Bevorzugt erfolgt der Sende- und/oder Empfangsbetrieb in zwei senkrecht zueinander stehenden Polarisationsebenen. Es wird insoweit auf bekannte Lösungen verwiesen. Grundsätzlich wird nachfolgend davon ausgegangen, dass eine sogenannte Basisstation jeweils HF-Signale in einem Frequenzband überträgt bzw. empfängt. Bei dem Ausführungsbeispiel gemäß Figur 3 strahlen die beiden Antennen in zwei Frequenzbändern, wobei jeweils eine Basisstation einem Frequenzband zugeordnet ist. Auch wenn beispielsweise eine Basisstation in mehreren Frequenzbändern senden und/oder empfangen soll, würde die nachfolgende Schilderung bezüglich der Steuerung (der protokollabhängigen Steuerung) jeweils für ein Frequenzband gelten, auch wenn beispielsweise die Sende- und Empfangseinheiten für zwei verschiedene Frequenzbänder in einer sogenannten einzigen Basisstation zusammengefasst werden.

Den beiden Antennensystemen ANT1 und ANT2 sind, wie beim Stand der Technik auch, zwei Basisstationen BS1 und BS2 zugeordnet, wobei die Basisstation BS1 beispielsweise zu einem älteren Antennensystem gehört, bei welchem die Basisstation über stromalarmierte Mobilfunkkomponenten gesteuert wird.

An einem Mast 1' stehen wiederum grundsätzlich nur zwei Speiseleitungen 5a und 5b zur Verfügung, die sich beide Antennensysteme teilen sollen.

Das Antennensystem ANT1 wird wiederum auch antennenseitig über stromalarmierte (CWA) ALD-Mobilfunkkomponenten 17.1 gesteuert, die über zwei HF-Verbindungsleitungen 5.1"a und 5.1"b mit der zugehörigen Antenne ANT1 verbunden sind.

Auch in diesem Ausführungsbeispiel sind wiederum zwei Basis-Diplexer 11L vorgesehen, wobei für die eine Polarisation der Ausgang BS1-A1 über eine basisstationsseitige Verbindungsleitung 5.1a mit einem ersten Eingang des Diplexers 11L verbunden ist und der antennenseitige Anschluss des Diplexers 11L über die HF-Speiseleitung 5a mit dem einen der beiden antennenseitigen Diplexer 11H verbunden ist, dessen antennenseitiger eine Anschluss mit der stromalarmierten ALD-Mobilfunkkomponente 17.1 über eine Verbindungsleitung 5.1'a in Verbindung steht.

Für die zweite Polarisation ist eine weitere basisseitige Verbindungsleitung 5.1b vom Ausgang BS1-A2 mit einem ersten Eingang des zweiten Diplexers 11L verbunden, dessen antennenseitiger Anschluss über die zweite HF-Speiseleitung 5b mit dem antennenseitigen zweiten Diplexer 11H verbunden ist, dessen einer Ausgang wiederum über eine entsprechende Verbindungsleitung 5.1'b mit dem zweiten Eingang der stromalarmierten ALD-Mobilfunkkomponente 17.1 verbunden ist.

Aus der Zeichnung (strichliert angedeutet) ist auch zu ersehen, dass über die geschilderten beiden HF-Speisestrecken 5a, 5b von der Basisstation BS1 zur ersten Antenneneinrichtung ANT1 nicht nur die HF-Signale, sondern auch die zugehörige DC-Versorgung für die Stromalarmierung mit erfolgt.

Entsprechend sind die beiden Ausgänge BS2-A1 und BS2-A2 der zweiten Basisstation BS2 mit den entsprechenden zweiten Eingängen der beiden basisstationsseitigen Diplexer 11L verbunden.

Für den Betrieb ist nunmehr vorgesehen, dass die obere Multiplexereinrichtung, im vorliegenden Fall in Form eines Diplexers 11H, den Leistungsverbrauch an seinen antennenseitigen Schnittstellen misst und ein entsprechendes Informationssignal z.B. in Form eines HDLC-Protokolls an den basisstationsseitigen Diplexer überträgt, beispielsweise mit einer Übertragungsrate von 115,2 kb/sec.

Diese Information kann den gemessenen Strom oder einen Ausfallzustand betreffen, beispielsweise bezüglich eines rauscharmen Empfangsverstärkers oder bezüglich zweier rauscharmer, in einem Gehäuse vorgesehener Empfangsverstärker TMA, wie sie für die Antenneneinrichtung ANT1 vorgesehen sind.

Die basisstationsseitige Diplexer-Schaltung 11L kann diese Information aus der Strom- und Datenleitung extrahieren und in Abhängigkeit dieser Information den benötigten Strom entsprechend einstellen. Dadurch wird die basisstationsseitige externe Strom- und Spannungsversorgung auf minimale Last gefahren.

Die Multiplex-, im vorliegenden Falle die Diplexschaltung, ermöglicht die jeweils benötigte Modulation, Demodulation, die Leistungs-Transformation sowie die Regelung bezüglich des Stromverbrauches.

In Abhängigkeit des Aufbaus der Multiplex- oder Diplexschaltung kann auch sichergestellt werden, dass die entsprechende Leistungsversorgung von der Strom- und Leistungsversorgung der Basisstationen getrennt wird. Mit anderen Worten kann die Leistungsversorgung für die Diplexeinheit separat extern zur Basisstation vorgesehen sein.

Die zweite Antenneneinrichtung ANT2 mit der zweiten Basisstation BS2-steuert die zugehörige Antenneneinrichtung ANT2 beispielsweise über ein 3GPP-Protokoll, wobei die beiden Anschlussleitungen an der Basisstation ebenfalls über die beiden Diplexer 11L und die nachgeschalteten beiden HF-Speisekabel 5a und 5b mit den beiden antennenseitigen Diplexer 11H verbunden sind, und zwar mit den jeweils zweiten Anschlüssen der oberen Diplexer 11H. In diesen beiden Diplexer 11H erfolgt dann wiederum die Aufspaltung der HF-Signale, wozu die antennenseitig jeweils vorgesehenen zweiten Anschlüsse an den Diplexern 11H mit den beiden Eingängen einer zugehörigen 3GPP-Mobilfunkkomponente 17.2 über Verbindungsleitungen 5.2'a und 5.2'b erfolgen. Die 3GPP-Mobilfunkkomponenten 17 bzw. 17.2 stehen dann über zwei weitere Anschlüsse an der zugehörigen Antenneneinrichtung ANT2 über die Verbindungsleitung 5.2"a und 5.2"b in Verbindung.

Angedeutet ist in Figur 3 auch, dass zumindest über eine HF-Strecke 5a von einem Anschluss der zweiten Basisstation BS2 auch eine DC-Versorgung bzw. das 3GPP-Protokoll übertragen wird. Dies ist in Figur 3 punktiert eingezeichnet, wobei nur eine der beiden Übertragungsstrecken (HF-Strecken) als DC-Versorgungs-Leitung und Übertragungsleitung für das 3GPP-Protokoll dient.

Sollte eine entsprechende Antennenanlage in Betrieb genommen werden, so ist z.B. folgendes Start-Szenario möglich:
1. Die Gleichstrom- und Pilotbypässe an der antennenseitigen Diplexereinheit 11 sind geöffnet.
2. Die basisstationssseitige Multi- oder Diplexereinheit 11 stellt einen benötigten Anteil der Leistungsversorgung (gegebenenfalls von einer externen Leistungsversorgung bereitgestellt) für die antennenseitigen Komponenten zur Verfügung und speist diese Leistung beispielsweise mit 12 Volt Gleichstrom in die HF-Speiseleitung.
3. Alle Basisstationsseitigen Schnittstellen des Basis-Diplexers 11L übertragen das Pilot-Signal (gegebenenfalls in einem Multiplexverfahren oder statisch). Bei dem Pilotsignal handelt es sich allgemein um das Trägersignal, welches zur Übertragung der Protokolle bzw. Protokollsignale entsprechend moduliert wird.
4. Der antennenseitige ANT1-Diplexer 11H wird über die HF-Speiseleitung gespeist und frägt seine Anschlüsse und Schnittstellen ab, ob möglicherweise ALD-Komponenten 17 angeschlossen sind (beispielsweise ob ein Gleichstromkurzschluss vorliegt oder nicht).
5. Um angeschlossene ALD-Komponenten 17 mit entsprechender Leistung (Gleichstrom) zu versorgen, wird ein antennenseitiger ANT-Diplexer 11H die Leistung in Abhängigkeit des abgefragten (gescannten) ALD-Zustandes aktivieren und zur Verfügung stellen.
6. Der antennenseitige Diplexer 11H misst die Leistungsversorgung einer angeschlossenen ALD-Komponente 17, und zwar permanent und übermittelt diese Information beispielsweise basierend auf dem AISG-Protokoll oder auf Basis des 3ms-Zeitschlitz-Verfahrens oder einem anderen beliebigen Protokoll oder Verfahren, beispielsweise mit einem Frequenzmultiplex-Verfahren oder einem proprietären Protokoll oder Verfahren an den basisstationsseitigen Diplexer 11L.
7. Der basisstationsseitige Diplexer 11L stellt den gewünschten Leistungsbedarf entsprechend ein.
8. Die basisstationsseitige Diplexer-Einrichtung 11L scannt permanent, d.h. frägt permanent beispielsweise in einem Multiplexverfahren(z.B. 0x7E oder andere Bytes/Bits) ihre Schnittstellen ab.
9. Das entsprechende Scannergebnis (Abfrageergebnis) wird an den antennenseitigen Diplexer 11H übermittelt, der entsprechend dieser Information seine Pilot-Bypässe öffnet. Der antennenseitige Diplexer 11H öffnet aber auch selbst seine Pilot-Bypässe, wenn er an einer entsprechenden antennenseitigen Schnittstelle ein entsprechendes Pilotsignal detektiert. Dies ist zum Beispiel dann möglich, wenn es sich nicht um eine CWA-Komponente sondern um ein Gerät handelt, welches nur von der Antennenseite aus zur Basisstationsseite kommuniziert. Dieses Abfrageergebnis wird ebenso an den basisstationsseitigen Diplexer 11L übermittelt, der dann wiederum, entsprechend dieser Information, seine zuordnungsrichtigen Pilot-Bypässe öffnet.
10. Die Datenrate zwischen dem Basisstations- und dem antennenseitigen Diplexer 11L und 11H wird beispielsweise auf 115,2 kbps eingestellt.

Bei der erwähnten Übertragung der beispielsweise mehreren AISG- und/oder der mehreren 3GPP-Protokolle zwischen der basisstationsseitigen und der antennenseitigen Multiplexer-Schaltung handelt es sich um eine Datenübertragung z.B. gemäß dem "High Level Data Link Control Verfahren". Es handelt sich dabei um ein normiertes Netzprotokoll, welches Punkt-zu-Punkt-Verbindungen oder auch Punkt-zu-Multipunkt-Verbindungen ermöglicht.

Da die Übertragung beispielsweise über HDLC-Frames mit höherer Geschwindigkeit erfolgt als die Übertragung des AISG- oder beispielsweise des 3GPP-Protokolls ermöglicht dies, dass die diversen AISG- oder 3GPP-Protokolle auf der HF-Speisestrecke zwischen den beiden Multiplexer-Schaltungen in einem oder mehreren HDLC-Frames verschachtelt übertragen werden. Beispielsweise können die diversen Protokolle auch zeitgleich, zum Beispiel mit einem Frequenzmultiplex-Verfahren übertragen werden. Auf der antennenseitigen Multiplexer-Schaltung werden dann die auf der HF-Speisestrecke zusammengefassten bzw. übertragenen Protokolle antennenrichtig über die jeweils zugeordneten Anschlüsse der betreffenden über das jeweilige Protokoll gesteuerten Antenneneinrichtung oder der der Antenneneinrichtung vorgeschalteten Antennen-Komponente zugeführt.

Grundsätzlich wäre es allerdings auch möglich, beispielsweise in der basisstationsseitigen Multiplexer-Schaltung die dort empfangenen Protokolle in ein davon abweichendes Protokoll zu übersetzen oder zu konvertieren und über die HF-Strecke zum Beispiel zeitlich verschachtelt oder gleichzeitig oder in einem anderen Modulationsverfahren zu der antennenseitigen Multiplexer-Schaltung zu übermitteln und dort in die jeweiligen originären Protokolle, z.B. in ein AISG- oder 3GPP-Protokoll rück zu übertragen.

Nur der Vollständigkeit halber wird angemerkt, dass beispielsweise von fünf angeschlossenen Basisstationen problemlos eine bis beispielsweise zwei, drei, vier oder allen Basisstationen mit dem AISG-Protokoll arbeiten und ihre zugehörige Antenneneinrichtungen steuern können, oder dass beispielsweise ein, zwei, drei, vier oder alle Basisstationen nur mit dem 3GPP-Protokoll arbeiten. Auf jeden Fall müssen die einzelnen Protokollabschnitte so verarbeitet werden, dass jeweils zuordnungsrichtig die bezüglich eines HF-Frequenzbandes oder einer Basisstation (wobei vereinfacht davon ausgegangen wird, dass für ein HF-Frequenzband jeweils eine Basisstation vorgesehen ist, auch wenn im herkömmlichen Sinn in einer Basisstation auch mehrere Sub-Basisstationen zusammengefasst sein können, die jeweils für die Übertragung in einem Frequenzband zuständig sind)zugeordneten Steuerungssignale zwischen den richtigen zusammengehörenden Basisstationen und den hierüber gesteuerten Antenneneinrichtungen ANT sowie den zugehörigen vorgeschalteten Antennenkomponenten 17 ausgetauscht werden.

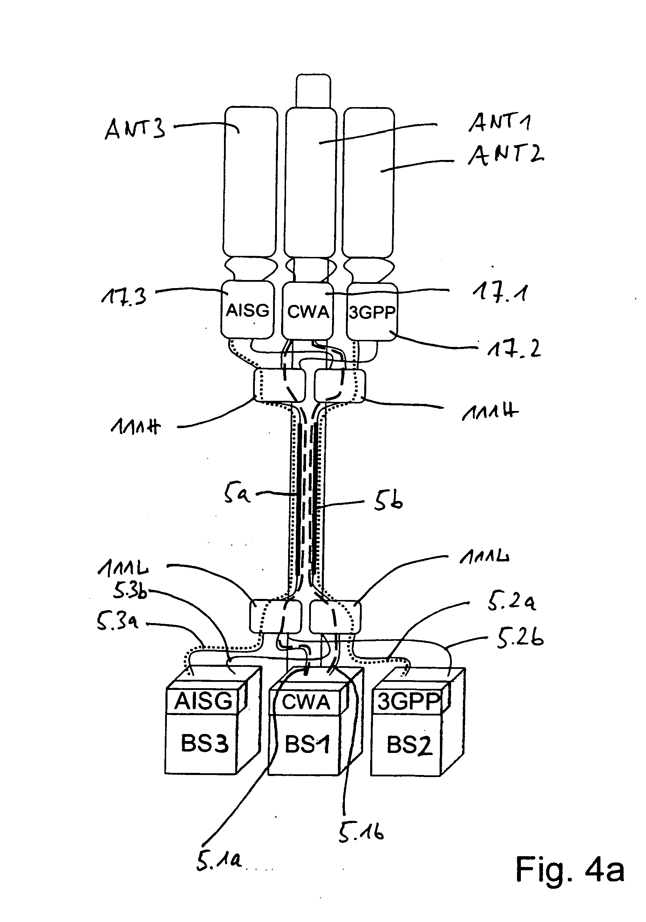

Nachfolgend wird auf Figur 4a Bezug genommen, in welcher ein erweitertes Ausführungsbeispiel gezeigt ist, bei welchem nunmehr noch eine dritte Antenneneinheit BS3 zugeschaltet ist, die mit einem AISG-Protokoll arbeitet.

Gemäß dieser Variante werden anstelle von Diplexern Triplexer 111 sowohl basisstationsseitig als auch antennenseitig eingesetzt, wobei jeweils ein Ausgang an allen drei Basisstationen über eine separate Leitung 5.1a, 5.2a bzw. 5.3a mit einem separaten Eingang des ersten basisseitigen Triplexers 111L und die jeweils zweiten Anschlüsse an den drei Basisstationen über jeweils eine weitere Verbindungsleitung 5.1b, 5.2b bzw. 5.3b mit jeweils einem separaten Eingang des zweiten basisseitigen Triplexers 111L verbunden ist. Der erste basisseitige Triplexer 111L ist dann mit der einen Speiseleitung 5a und der zweite Triplexer 111L mit der zweiten Speiseleitung 5b elektrisch verbunden. An der oberen Antennenseite erfolgt dann umgekehrt die Aufspaltung von den HF-Speisekabeln 5a, 5b unter Zuhilfenahme der beiden antennenseitigen Triplexer 111H auf die jeweiligen Mobilfunkkomponenten 17, von denen bezüglich der Antenneneinrichtung ANT3 eine auf dem AISG-Protokoll basierende Komponente 17 zum Einsatz gelangt.

Die über die zwei Feeder 5a und 5b vorgenommene Gleichstrom-Versorgung einschließlich der Kommunikation mittels des AISG- bzw. 3GPP-Protokolls (oder eines anderen Protokolls, beispielsweise eines proprietären Protokolls) ist in Figur 4a punktiert eingezeichnet. Daraus ist also zu ersehen, dass beispielsweise zwischen der Basisstation BS3 und den antennenseitigen Geräten 17.3 das AISG-Protokoll über die Speiseleitung 5a übertragen wird, wohingegen zwischen der Basisstation BS2 und den zugehörigen antennenseitigen Geräten 17.2 das 3GPP-Protokoll für die zweite Speiseleitung 5b übertragen wird. Von den CWA-Geräten 17.1 werden die entsprechenden stromalarmierten Signale zur Basisstation BS1 über beide Speiseleitungen 5a und 5b übertragen. Dazu ist die weitere Gleichstrom-Versorgung über je einen der beiden Feeder 5a, 5b für die Realisierung der Stromalarmierung strichliert eingezeichnet.

Die Multiplexschaltung hier in Form eines Triplexers fragt ständig alle Eingänge ab, ob dort ein AISG-Protokoll, ein 3GPP-Protokoll (oder ein anderes Protokoll) anliegt und/oder ob lediglich ein Gleichstromsignal oder Gleichstrompegel detektiert wird, der für die stromalarmierten CWA-Geräte benötigt wird.

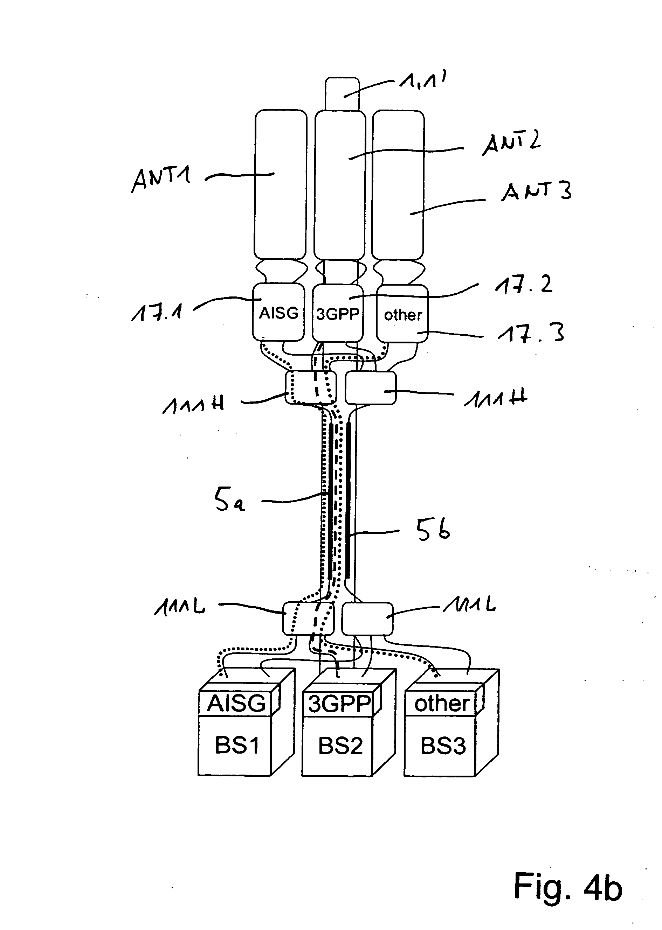

Anhand von Figur 4b ist im Gegensatz zu dem Ausführungsbeispiel nach Figur 4a lediglich dargestellt, dass hier beispielsweise die AISG-Protokolle sowie ein 3GPP-Protokoll oder auch andere Protokolle(beispielsweise ein proprietäres Protokoll) zwischen der Basisstation BS1 bzw. BS2 bzw. BS3 und die zugehörigen antennenseitigen Geräte 17.1 bis 17.3 über lediglich eine Feeder-Strecke, das heißt eine Speisestrecke 5a übertragen werden können, und zwar in einem geeigneten Verfahren, beispielsweise wiederum einem Zeitmultiplex-Verfahren oder einem Frequenzmultiplex-Verfahren oder einem davon abweichenden anderen Verfahren beispielsweise unter Verwendung eines oder mehrerer proprietärer Protokolle. Dazu dienen die erläuterten basisstationsseitigen Triplexer 111L bzw. die antennenseitigen Triplexer 111H, worüber die entsprechenden Protokolle auf die gemeinsame Feeder-Strecke zusammengeführt bzw. auf die unterschiedlichen antennenseitigen Geräte 17.1 bis 17.3 oder Basisstationen getrennt werden.

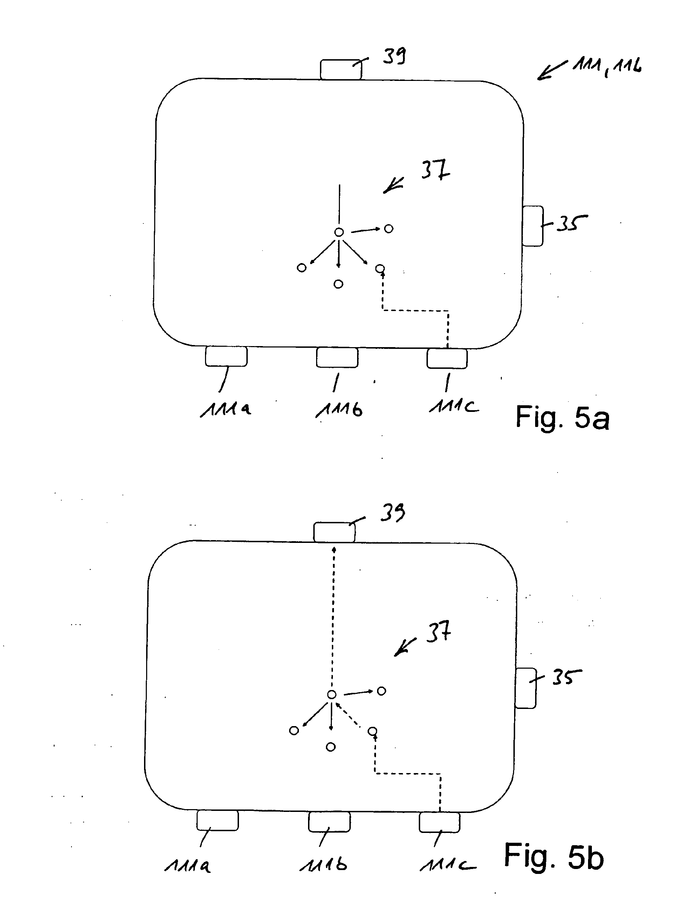

Anhand von Figur 5a ist schematisch ein erfindungsgemäßer Multiplexer 111L (beispielsweise in Form eines erfindungsgemäßen Triplexers 111) dargestellt, der an seinen drei Eingängen 111a, 111b und 111c beispielsweise über drei separate Verbindungsleitungen mit den Basisstationen BS1, BS2 und BS3 verbunden ist. Intern wird in dem Multiplexer jeder der drei Eingänge 111a bis 111c nacheinander folgend oder gleichzeitig abgetastet, d.h. abgefragt, ob beispielsweise ein HDLC-Signal (HDLC-Frame) mit entsprechender Dateninformation anliegt. Wird beispielsweise wie in Figur 5a dargestellt nach Abfrage aller Schnittstellen-Anschlüsse festgestellt, dass am Eingang 111c beispielsweise ein von der dritten Basisstation BS3 kommendes AISG-Protokoll-Signal anliegt, wird dieses dann am Ausgang 39 in die HF-Übertragungsstrecke 5 eingespeist, vorzugsweise in Form eines HDLC-Frames. Dies ermöglicht es, dass bei einem dauernden bzw. zeitlich versetzt aufeinander folgenden oder gleichzeitigen Abtasten der einzelnen Eingänge 111a bis 111c die einzelnen dort anstehenden Protokollsignale mit höherer Übertragungsgeschwindigkeit verschachtelt, beispielsweise als HDLC-Frame, zu dem antennenseitigen Triplexer auf einer gemeinsamen Übertragungsstrecke 5 übertragen werden kann, wie dies in Figur 5b wiedergegeben ist. Genauso könnten die anstehenden Protokollsignale aber auch gleichzeitig auf einer gemeinsamen Übertragungsstrecke 5, beispielsweise in einem Frequenzmultiplex-Verfahren oder einem anderen Modulationsverfahren oder mittels einer Kombination unterschiedlicher Modulationsverfahren übertragen werden, beispielsweise auch unter Einschluss eines proprietären Modulationsverfahrens. Dabei ist in Figur 5b angedeutet, dass zu diesem Zeitpunkt beispielsweise das an einem dritten Eingang 111c anstehende Protokollsignal, beispielsweise ein AISG-Signal, über die in diesem basisstationsseitigen Triplexer 111L integrierte Scannereinrichtung 37 in den HDLC-Frame übertragen und mit entsprechender höherer Übertragungsgeschwindigkeit über den Anschluss 39 in die in Figur 5a und 5b nicht näher dargestellte HF-Speiseleitung 5 eingespeist wird.

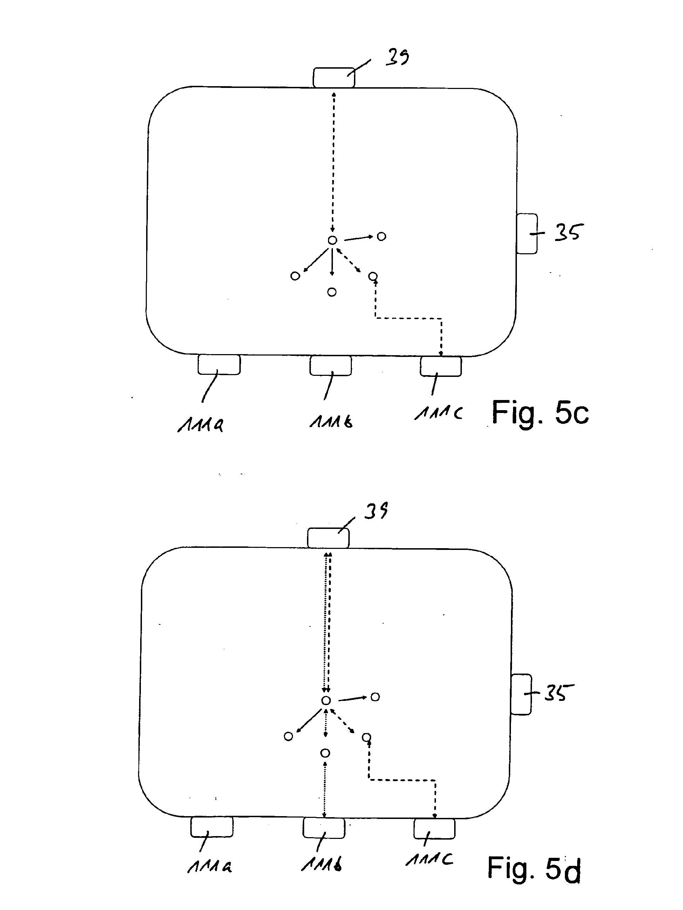

In Figur 5c ist dabei dargestellt, dass nach Detektion eines beispielsweise am dritten Eingang 111c anstehenden Protokollsignals eine entsprechende Durchschaltung dieser Anschluss- oder Schnittstelle 111c zu der HF-speiseleitungsseitigen Anschluss- oder Schnittstelle 39 erfolgt, also zu diesem Zeitpunkt eine zeitlich verschachtelte oder permanente Protokoll-Übertragung zu dem antennennahen ANT-Multiplexer 111H bzw. einem der Multiplexer 111H und damit zu den darüber angeschlossenen antennennahen Komponenten erfolgt. Nach dem Verbindungsaufbau wird das Übertragungsprotokoll beispielsweise in Form eines HDLC-Protokolls übertragen.

Anhand von Figur 5d ist nur zur Vervollständigung verdeutlicht, dass beispielsweise bei Detektion von zwei Protokollsignalen an den Eingängen 111b und 111c nach dem Verbindungsaufbau diese Protokoll-Signale auf den HF-speiseleitungsseitigen Anschluss 39 durchgeschaltet werden, also zu den entsprechenden antennenseitigen Komponenten, und zwar über die antennennahe Multiplexerschaltung. Nach dem Verbindungsaufbau kann das Übertragungsprotokoll beispielsweise über zwei unterschiedliche HDLC-Protokoll-Signale (z.B. in Form eines AISG- oder eines 3GPP-Protokollsignals oder eines entsprechend verschachtelten Übertragungsprotokolls) erfolgen. Gleiches gilt für den Fall, dass auch an dem ersten Eingang 111a ein entsprechendes Protokollsignal detektiert wird. In diesem Falle würden alle drei basisstationsseitigen Anschlüsse und damit die dort anstehenden Protokollsignale über den HF-speiseleitungsseitigen Anschluss 39 verbunden und die Protokollsignale so durchgeschaltet werden, zum Beispiel zeitlich verschachtelt oder gleichzeitig, und zwar in Abhängigkeit des eingesetzten Modulationsverfahrens oder der eingesetzten Kombination unterschiedlicher Modulationsverfahren.

Entsprechend würden von der oberen antennennahen Multiplexer-Schaltung 111, 111H die entsprechenden Protokollsignale an den HF-speiseleitungsseitigen Anschluss 39 anstehen und dann zuordnungsrichtig in einzelne Protokollsignale aufgespalten oder getrennt werden, die zuordnungsrichtig in die basisstationsseitige Anschlüsse 111a, 111b bzw. 111c eingespeist werden. Denn bei der Übertragung der Protokolle wird stets die entsprechende Information mit übertragen, von welcher Basisstation über welchen zugehörigen Anschluss ein eingespeistes Protokollsignal für welche Antenneneinrichtung ANT1 bis ANT3 und damit für welchen antennenseitigen Anschluss 111'a, 111'b bzw. 111'c der antennennahen ANT-Multiplexer-Schaltungseinrichtung bestimmt ist. Das gleiche gilt für die von den antennennahen Komponenten 17 zu den zur Basisstation übertragenen Protokollsignalen. Auch hier erfolgt die richtige Zuordnung der von bestimmten Komponenten zu den zugehörigen

Basisstationen übertragenen Protokollsignalen.

Die Protokollerkennung an den Basisstationsseitigen Multiplexer-Anschlüssen kann statisch oder dynamisch erfolgen.

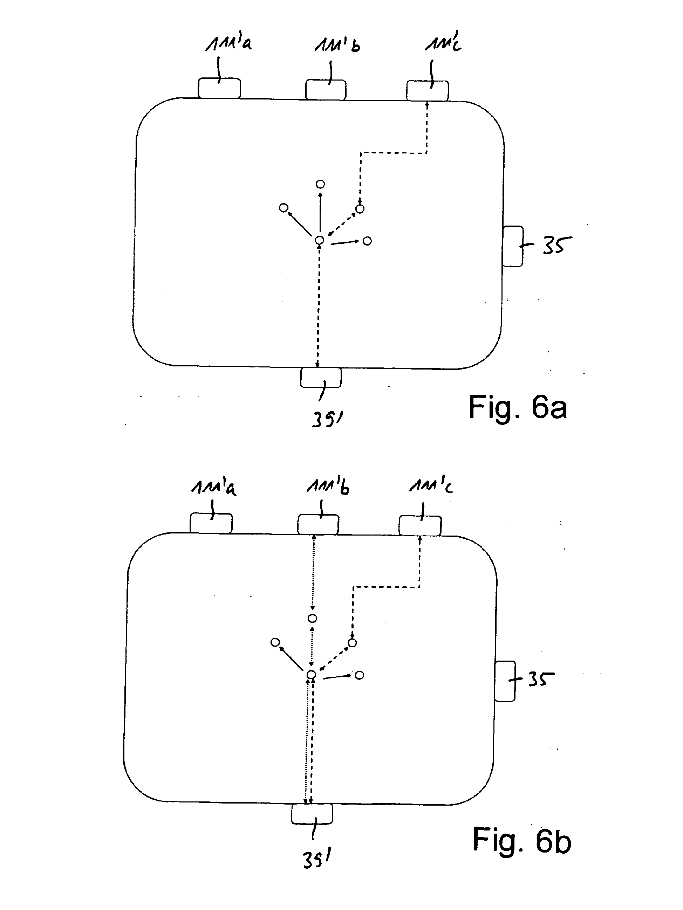

Die entsprechenden, an den basisstationsseitigen Anschlüssen der basisstationsseitigen Multiplexer-Schaltungen 111L anstehenden Protokollsignale werden dann wie erwähnt an die antennenseitigen Triplexer 111H zur Einstellung bzw. zur Konfiguration der Antennenkomponenten 17 und gegebenenfalls der Antenneneinrichtung selbst übermittelt. Dies ist beispielsweise in Figur 6a und 6b dargestellt, wo zum Ausdruck kommt, dass von der Speiseleitung 5 kommend am Anschluss 39' die empfangenen Daten und Protokolle entsprechend konvertiert bzw. aus dem HDLC-Frame separiert werden, um an den Ausgängen 111'a, 111'b bzw. 111'c beispielsweise Gleichstromanteile bzw. ein 3GPP- oder ein AISG-Protokoll oder ein anderes Protokoll (beispielsweise auch ein proprietäres Protokoll) an die antennenseitigen Mobilfunkkomponenten weiterzuleiten. Mit anderen Worten wird dadurch letztlich gewährleistet, dass die jeweiligen zwischen der basisstationsseitigen und der antennenseitigen Multiplexer-Schaltung ausgetauschten und/oder übertragenen Protokolle den entsprechenden Antennen-Komponenten 17.1 bis 17.3 der Antenneneinrichtung ANT1 bis ANT3 in richtiger Zuordnung übertragen werden.

Figur 6b dient dabei der Verdeutlichung, dass der antennennahe ANT-Multiplexer 111H (Triplexer) beispielsweise über die HF-Speiseleitung an seinem entsprechenden Anschluss 39' ein Übertragungsprotokoll mit zwei beispielsweise verschachtelten oder gleichzeitig übertragenen Einzel-Protokollen empfängt, so dass er zuordnungsrichtig die HF-Speiseleitungs-Schnittstelle 39' mit den beiden antennenseitigen Anschlüssen 111'b und 111'c verbindet, worüber zuordnungsrichtig die zugeordneten Basisstationen BS2 und BS3 mit den ihm zugeordneten Antenneneinrichtungen bzw. den den Antenneneinrichtungen zugeordneten Mobilfunk-Komponenten 17.2 und 17.3 kommunizieren können. Nach dem erfolgten Verbindungsaufbau kann das Übertragungsprotokoll beispielsweise als HDLC-Protokoll auf der gemeinsamen HF-Speisestrecke übertragen werden oder beispielsweise auch über zwei eventuelle jeweils unterschiedliche HDLC-Protokoll-Signale (beispielsweise in Form eines AISG- oder eines 3GPP-Signals).

Die Multiplexschaltungen können dann variabel einstellbare Stromverbräuche (Stromsenken) für jede Basisstation simulieren, worüber die stromalarmierte Steuerung der insbesondere älteren Antennenanlagen mit CWA-Geräten weiterhin durchführbar ist.

Durch den geschilderten Aufbau wird also eine galvanische Trennung der basisstationsseitigen Anschlüsse der Multiplex-Schaltungen von den antennenseitigen Multiplex-Schaltungen vorgenommen. Die basisstationsseitigen Multiplexer 11L bzw. 111L simulieren durch eine entsprechende Leistungsaufnahme an den entsprechenden, für die Verbindung zur Basisstation vorgesehenen Multiplexer-Eingängen Zustände (z.B. Leistungsaufnahme in allen Betriebs- und Fehlerzuständen), die denen der jeweiligen Basisstation zugeordneten ALD-Geräten, wie beispielsweise Empfangsverstärker, entsprechen (entweder fest eingestellt und/oder konfigurierbar).

Die von den unterschiedlichen Basisstationen aufgenommenen (zusammengeschalteten) DC-Leistungen (bei eventuell unterschiedlichen DC-Spannungen) werden durch die betreffende Multiplex-Schaltung auf eine geeignete DC-Spannung (z.B. 12 Volt oder 30 Volt oder eine davon völlig abweichende Spannung) transformiert und zur Versorgung der installierten ALD-Geräten und/oder Komponenten 17 in das entsprechende Feeder-Kabel 5a bzw. 5b und damit in den antennenseitigen Multiplex-Anschluss eingespeist.

Eine zusätzliche bzw. insgesamt benötigte DC-Leistungsaufnahme der ALD-Geräte und -Komponenten sowie der Multiplexer kann dem System bei Bedarf über eine weitere Schnittstelle an dem betreffenden Multiplex-Gerät zur Verfügung gestellt werden.

Dazu wird nur beispielhaft auf die Figuren 5a bis 5d und Figuren 6a und 6b verwiesen, in denen ein entsprechender Multiplexer in Alleinstellung schematisch dargestellt ist, der an seiner einen Anschlussseite beispielsweise bei dem Ausführungsbeispiel gemäß Figuren 5a bis 5d und 6a und 6b drei Schnittstellen 111a, 111b, 111c bzw. 111'a, 111'b, 111'c aufweist, worüber die Verbindung zu den drei Basisstationen BS1, BS2 und BS3 bzw. den drei Antenneneinrichtungen herstellbar ist.

Ferner ist in den Figuren 5a bis 6b eine zusätzliche Schnittstelle 35 eingezeichnet, die beispielsweise als Zusatz-Schnittstelle vorgesehen ist, und beispielsweise als AISG- oder 3GPP-Schnittstelle oder Anschlussstelle fungieren kann, auch um über diese zusätzliche Schnittstelle gegebenenfalls eine Gleichstrom-Spannungsversorgung für antennenseitige ALD-Geräte und Komponenten 17 bereitzustellen, wobei diese zusätzliche Schnittstelle zum Beispiel auch nur der zusätzlichen Bereitstellung einer Versorgungsleistung dienen kann.

Über die erwähnte zusätzliche Schnittstelle 35 der antennenseitigen Multiplexer-Schaltung können auch weitere AISG-/3GGP- oder anderen Protokolle unterstützende ALD-Mobilfunkkomponenten angeschlossen werden. Die Zuordnung, welcher Anschluss des basisstationsseitigen Multiplexers der oberen, zusätzlichen Schnittstelle 35 des antennenseitigen Multiplexers entspricht, kann vorzugsweise konfiguriert werden. Liegt aber z.B. nur ein einziges Protokollsignal an einem Anschluss der basisstationsseitigen Multiplexer-Schaltung an, so wird die zusätzliche Schnittstelle 35 der antennenseitigen Multiplexer-Schaltung beispielsweise genau diesem Anschluss zugeordnet.

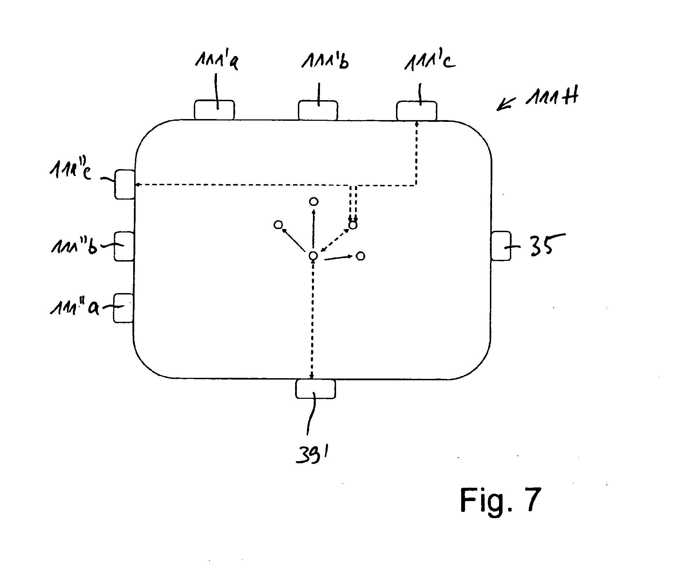

Nachfolgend wird noch auf das Ausführungsbeispiel gemäß Figur 7 Bezug genommen, welches einen abgewandelten erfindungsgemäßen Multiplexer, d.h. im Konkreten einen erfindungsgemäßen Triplexer zeigt, der insbesondere als antennenseitiger Triplexer 111H eingesetzt werden kann.

Aus dem Ausführungsbeispiel ist zu ersehen, dass neben der erwähnten zusätzlichen Schnittstelle 35 die in Figur 7 gezeigte antennenseitige Multiplexer-Schaltung 111H weitere Anschlüsse aufweist, nämlich im gezeigten Ausführungsbeispiel drei zusätzliche Anschlüsse 111"a, 111"b und 111"c.

Wie anhand der Zeichnungen dargestellt ist, wird jedes über die HF-Speiseleitung und dem speiseleitungsseitigen Anschluss 39' empfangene Übertragungsprotokoll ähnlich einem Splitter aufgespalten und beispielsweise nicht nur dem Ausgang 111'c, sondern auch dem parallelen Anschluss 111"c zugeführt. Dies eröffnet die Möglichkeit, dass über die antennenseitige Multiplexer-Schaltung 111H weitere AISG-/3GPP-Protokolle oder andere Protokolle unterstützende ALD-Mobilfunkkomponenten an diesem zusätzlichen Anschluss angeschlossen werden können, die über die Protokollsignale entsprechend mit gesteuert werden. Diese zusätzlichen Schnittstellen oder Anschlüsse weisen vor allem den Vorteil auf, dass jedem einzelnen Antennensystem ANT1, ANT2 und/oder ANT3 einzeln zugeordnete weitere ALD-Komponenten in das Mobilfunksystem eingebunden werden können, beispielsweise auch für die Downtilt-Winkeleinstellung vorgesehene RET-Einheiten oder dergleichen. Dabei kann die Anordnung abweichend von Figur 7 auch so ausgestattet sein, dass nicht nur für alle drei antennenseitigen Anschlüssen 111'a bis 111'c ein zusätzlicher paralleler Anschluss vorgesehen ist, sondern nur für einen dieser Anschlüsse ein einziger zusätzlicher Anschluss 111"a, 111"b oder 111"c, oder für eine beliebige Teilmenge, also beispielsweise im gezeigten Ausführungsbeispiel nur zwei zusätzliche Schnittstellen.

Obgleich die zusätzlichen Schnittstellen anhand von Figur 7 nur für den oberen Multiplexer 111H beschrieben sind, können diese zusätzlichen Schnittstellen oder einige oder nur eine einzige weitere Schnittstelle auch für den basisstationsseitigen Multiplexer 111L entsprechend vorgesehen sein, um zusätzliche Konfigurationsmöglichkeiten zu eröffnen.

Durch die in der zugehörigen Multiplex-Schaltung vorgesehene Abfrage- oder Scanneinrichtung 37 werden die eingangsseitigen Anschlüsse 111 bzw. 111' und gegebenenfalls auch der Zusatz-Anschluss 35 permanent mit abgefragt, um festzustellen, von welchem der Anschlüsse beispielsweise ein HDLC-Frame ankommt, also ein entsprechendes Steuerungssignal (beispielsweise ein AISG-Signal).

Dieses Signal kann dann an dem antennenseitigen Anschluss 39 anstehen und weitergeleitet werden.

Die erwähnte Zusatz-Schnittstelle 35 kann also zu einer zusätzlichen oder insgesamt benötigten Gleichstrom-Leistungsaufnahme aller ALD-Geräte und -Komponenten sowie für den Betrieb der Multiplexer verwendet werden.

Die antennenseitig zugewandten ANT-Multiplex-Anschlüsse sind zunächst spannungsfrei und hochohmig. Die der Basisstation zugewandten BS-Multiplex-Anschlüsse sind ebenfalls zunächst hochohmig. Entsprechende DC-Spannung (z.B. die der Basisstation) liegen an ihnen an.

Der antennenseitige ANT-Multiplexer 111H überprüft jeden Ausgang auf eventuell angeschlossene DC-Verbraucher (beispielsweise doppelte rauscharme Empfangsverstärker DTMA, vorgesehene Bias Tee Schaltungen SBT oder beispielsweise vorhandene RET-Schaltungen zur fernsteuerbaren Einstellung des Down-tilt Winkels) und misst regelmäßig (wobei das Zeitintervall vorzugsweise konfigurierbar ist) deren Stromaufnahme. Die an einer HF-Speiseleitung (Feeder) anliegende DC-Spannung wird nur an die ANT-Multiplex-Ausgänge durchgeschaltet, welche auch mit einem DC-Verbraucher verbunden sind. Alle ANT-Multiplexer-Ausgänge sind dabei kurzschlussfest.

Eine systemgegebene Konfigurationseinstellung kann über weitere Multiplexer-Schnittstellen wie auch über den der

Basisstation zugewandten ANT-Multiplexer-Anschluss voreingestellt werden. Die an den jeweiligen antennenseitigen Anschlüssen gemessenen Stromaufnahme werden an den BS-Multiplexer kommuniziert. Der BS-Multiplexer stellt dann die Leistungsaufnahmen an seinen basisstationsseitigen Anschlüssen entsprechend den kommunizierten Messwerten ein. Diese so aufgenommene variable Leistung wird stets zur Versorgung der angeschlossenen Verbraucher verwendet. Somit werden die von den ALD-Geräten und -Komponenten 17 aufgenommenen Leistungen transparent an die jeweiligen Basisstationen durchgereicht. Diese Transparenz ist gerade bei CWA-Geräten, also stromalarmierten ALD-Geräten und Komponenten von großer Bedeutung.

Der basisstationsseitige Multiplexer 111L überwacht seine basisstationsseitigen Anschlüsse auf eventuell vorhandene Protokollsignale (z.B. AISG-, 3GPP- oder andere davon abweichende Protokolle). Diese Überwachung kann statisch oder im Multiplexverfahren erfolgen.

Wird ein entsprechendes Signal erkannt, sendet der basisstationsseitige Multiplexer seine Informationen an den antennenseitigen BS-Multiplexer-Anschluss. Die Information darüber, welches Protokollsignal von welchem BS-Multiplexer-Eingang kommt, wird an den zugehörigen ANT-Multiplexer kommuniziert. Auf diese Information kann gegebenenfalls verzichtet werden, nämlich zum Beispiel dann, wenn die diversen Protokolle zeitgleich, zum Beispiel mit einem Frequenzmultiplex-Verfahren, übertragen werden. Hier ist die Zuordnung, welches Protokollsignal von welchem BS-Multiplexer-Eingang kommt, durch die Funktionsweise der Multiplexer gegeben.

Der jeweilige antennenseitige Multiplexer sendet die entsprechenden, über den basisstationsseitigen Multiplexer-Anschluss empfangenen, Protokollsignale an die jeweiligen antennenseitigen ANT-Multiplexer-Ausgänge und somit zu den entsprechenden ALD-Geräten.

Die ANT-Multiplexer-Ausgänge, über welche nicht kommuniziert wird, sind für das Protokollsignal hochohmig. Zudem bestehen zwischen den basisstationsseitigen Anschlüssen der basisstationsseitigen Multiplexer-Schaltung 11L bzw. 111L und der antennenseitigen Multiplexer-Schaltung 11H bzw. 111H eine galvanische Trennung.

Aus dem erläuterten Aufbau wird deutlich, dass die oben erwähnte zusätzliche Multiplexer-Schnittstelle 35 bei einer ausreichenden Gleichstrom-Gesamtleistung an den basisstationsseitigen Anschlüssen auch weggelassen werden kann. Ebenso kann über die optionale Zusatz-Schnittstelle 35 an den Multiplexern auch eine Kommunikation mit den hierüber erreichbaren ALD-Geräten und -Komponenten 17 erfolgen, beispielsweise zur Einstellung und Kontrolle der ALD-Kommunikation unabhängig von den Basisstationen, beispielsweise auch im Falle einer Systeminstallation, falls die Basisstation noch nicht installiert ist.

Die Konfiguration der Multiplexer kann sowohl über deren HF-Anschlüsse (z.B. über die basisstationsseitigen BS-Multiplexer-Anschlüsse, aber auch über den antennenseitigen BS-Multiplexer-Anschluss) als auch über die zusätzliche Schnittstelle 35 vorgenommen werden. Diese HF-Anschlüsse neben der zusätzlichen Schnittstelle 35 können ebenfalls als Service-Schnittstelle verwendet werden, um zum Beispiel die Geräte mit einem neuen Betriebsprogramm zu versorgen. Dies gilt auch für den antennennahen Multiplexer. Zudem kann der antennenseitige Multiplexer sogar über einen Anschluss an den basisstationsseitigen Multiplexer konfiguriert werden.

Die Ausführungsbeispiele sind für Multiplexer erläutert worden, die quasi als separate Geräte oder Baueinheiten im Bereich der Basisstation vor der HF-Übertragungsstrecke oder in der Nähe der zugehörigen Antenneneinrichtung am anderen Ende der in der Regel über dem Mast oder einem Gebäude verlaufenden HF-Strecke vorgesehen sind.

Die erläuterten Multiplexer mit ihren entsprechenden Funktionen können aber auch beispielsweise in einer Antenneneinrichtung ANT1 bis ANT3 oder in der zugehörigen Basisstation BS1 bis BS3 integriert sein.

Zusätzlich können die zugehörigen Multiplexer z.B. auch die Funktion der Abbildung unterschiedlicher ALD-Geräte in dem basisstationsseitigen Multiplexer unterstützen, das heißt z.B., dass die Kommunikationsschnittstellen der einzelnen ALD-Geräte in den betreffenden Multiplexer in der Basisstation hinein wandern. Somit wird beispielsweise ein Multiplexer zu einem standardisierten ALD-Gerät (z.B. ein Compound-Antenna-Device).

Die antennennah vorgesehenen Multiplexer oder Triplexer 11H bzw. 111H können also entsprechend dem geschilderten Aufbau als Protokoll- und Zustands- bzw. Alarm-Konverter bezeichnet werden, bei denen beispielsweise ein AISG- oder ein 3GPP-Protokoll oder ein anderes Protokoll (beispielsweise auch ein proprietäres Protokoll) entsprechend konvertiert (zum Beispiel in einem Frequenzmodulationsverfahren oder in einem anderen gegebenen Modulationsverfahren) oder "verschachtelt" wird, um auf die Übertragungsstrecke entsprechend eingespeist zu werden.

Der Aufbau der Mobilfunkanlage ist für den Fall beschrieben worden, dass unter jeder Basisstation eine Mobilfunk-Einheit zu verstehen ist, die in einem bestimmten Frequenzband sendet und/oder empfängt. Insoweit können die in den Figuren dargestellten Basisstationen BS1, BS2 und BS3 oder einige Untergruppen davon auch zu einer "realen Basisstation" zusammengefasst sein, wobei eine derartige reale Basisstation beispielsweise die in den Figuren gezeigte BS1 und BS2 (oder BS1 und BS3 bzw. BS2 und BS3 oder alle drei Basisstationen BS1-BS3) umfasst, die in verschiedenen Frequenzbändern Einsatz finden oder senden und empfangen.

## Patentansprüche

1. Antennen-Übertragungs-Steuerungseinrichtung mit folgenden Merkmalen:
- es ist eine Basisstation-Multiplexer-Schaltung (11L, 111L) vorgesehen,
- die Basisstation-Multiplexer-Schaltung (11L, 111L) weist mehrere basisstationsseitige HF-Anschlüsse (111a, 111b, 111c) auf,
- die Basisstation-Multiplexer-Schaltung (11L, 111L) weist zumindest einen HF-Speiseleitungs-Anschluss (39) auf,
**gekennzeichnet durch** folgende Merkmale:
- die Basisstation-Multiplexer-Schaltung (11L, 111L) umfasst eine_Scannereinrichtung (37), mittels der die basisstationsseitigen Anschlüsse (111a, 111b, 111c) nacheinander oder gleichzeitig scannbar und die an den basisstationsseitigen Anschlüssen (111a, 111b, 111c) anstehenden Protokoll-Signale detektiebar sind, die in den HF-Speiseleitungs-seitigen Anschluss (39) als Protokoll-Signale und/oder Übertragungsprotokoll einspeisbar sind,
- die Basisstation-Multiplexer-Schaltung (11L, 111L) ist so aufgebaut, dass die an dem zumindest einen HF-Speiseleitungs-Anschluss (39) anstehenden Protokoll-Signale und/oder das dort anstehende Übertragungsprotokoll in unterschiedliche Einzelprotokolle separier- oder konvertierbar sind bzw. ist, die in die jeweils zugeordneten basisstationsseitigen Anschlüsse (111a, 111b, 111c) einspeisbar sind, und
- an zumindest einem basisstationsseitigen Anschluss (111a, 111b, 111c) der Basisstation-Multiplexer-Schaltung (11L, 111L) ist eine Gleichspannung einspeisbar, die auf den HF-Speiseleitungs-seitigen Anschluss (39) der Basisstation-Multiplexer-Schaltung (11L, 111L) durchgeschaltet wird.

2. Antennen-Übertragungs-Steuerungseinrichtung nach Anspruch 1, **dadurch gekennzeichnet, dass** die an den basisstationsseitigen Anschlüssen (111a, 111b, 111c) der Basisstation-Multiplexer-Schaltung (11L, 111L) detektierten Protokolle bzw. Protokollsignale in den zumindest einen HF-Speiseleitungs-seitigen Anschluss (39) einspeis- und/oder darüber übertragbar sind, und zwar gleichzeitig, zeitlich versetzt und/oder zeitlich verschachtelt, insbesondere in einem Zeitmultiplex-Verfahren, in einem Frequenzmultiplex-Verfahren, in einem anderen Modulationsverfahren wie beispielsweise einem proprietären Modulationsverfahren oder in einer Kombination von zwei oder mehreren der vorstehend genannten Verfahren.

3. Antennen-Übertragungs-Steuerungseinrichtung nach Anspruch 1 oder 2, **dadurch gekennzeichnet, dass** mittels der Scannereinrichtung (37) in der Basisstation-Multiplexer-Schaltung (11L, 111L) unterschiedliche Protokolle, insbesondere zumindest ein oder mehrere AISG- und/oder ein oder mehrere 3GPP-Protokolle detektierbar und in ein z.B. davon abweichendes Übertragungsprotokoll, insbesondere ein HDLC-Frame-Netzprotokoll-Signal, umsetzbar und in den HF-Speiseleitungs-seitigen Anschluss (39) einspeisbar sind.

4. Antennen-Übertragungs-Steuerungseinrichtung nach einem der Ansprüche 1 bis 3, **dadurch gekennzeichnet, dass** die Basisstation-Multiplexer-Schaltung (11L, 111L) so aufgebaut ist, dass aus mehreren unterschiedlichen Gleichstromspannungen, die an mehreren basisstationsseitigen Anschlüssen (111a, 111b, 111c) anliegen, eine einzige daraus erzeugte Gleichstromspannung durch Transformation erzeugt wird und an dem HF-Speiseleitungs-seitigen Anschluss (39) einspeisbar ist.

5. Antennen-Übertragungs-Steuerungseinrichtung nach einem der Ansprüche 1 bis 4, **dadurch gekennzeichnet, dass** die basisstationsseitigen Anschlüsse (111a, 111b, 111c) der Basisstation-Multiplexer-Schaltung (11L, 111L) vor Betriebsbeginn hochohmig sind.

6. Antennen-Übertragungs-Steuereinrichtung nach einem der Ansprüche 1 bis 5, **dadurch gekennzeichnet, dass** eine an dem zumindest einen HF-Speiseleitungs-Anschluss (39) vorhandene Gleichstrom- und/oder Spannungs-Zustandsänderung in Abhängigkeit eines an dem zumindest einen HF-Speiseleitungs-Anschluss (39) anschließbaren Verbrauchers an dem zuordnungsrichtigen basisstationsseitigen Anschluss oder den jeweils zuordnungsrichtigen basisstationsseitigen Anschlüssen (111a, 111b, 111c) eingestellt und/oder simuliert werden.

7. Antennen-Übertragungs-Steuerungseinrichtung mit folgenden Merkmalen:
- es ist eine Antennensystem-Multiplexer-Schaltung (11H, 111H) vorgesehen,
- die Antennensystem-Multiplexer-Schaltung (11H, 111H) weist zumindest einen HF-Speiseleitungs-Anschluss (39') auf,
- die Antennensystem-Multiplexer-Schaltung (11H, 111H) weist mehrere antennenseitige HF-Anschlüsse (111'a, 111'b, 111'c) auf,
**gekennzeichnet durch** folgende Merkmale:
- die Antennensystem-Multiplexer-Schaltung (11H, 111H) umfasst eine Konverterschaltung, worüber die an dem HF-Speiseleitungs-seitigen Anschluss (39') anstehenden Protokoll-Signale und/oder das dort anstehende Übertragungsprotokoll in unterschiedliche Einzelprotokolle konvertier- und/oder separierbar sind bzw. ist, die in die jeweils zugeordneten antennenseitigen Anschlüssen (111'b, 111'c) einspeisbar sind, an denen protokollgesteuerte Antennenkomponenten (17.2, 17.3) anschließbar sind, und
- mittels der Konverterschaltung sind die an den antennenseitigen Anschlüssen (111'b, 111'c) anstehenden Signale oder Einzelprotokolle als Protokoll-Signale und/oder als zusammengefasstes und/oder konvertiertes Übertragungsprotokoll in den HF-Speiseleitungs-seitigen Anschluss (39') einspeisbar, und
- an dem HF-Speiseleitungsseitigen Anschluss (39') der Antennensystem-Multiplexer-Schaltung (11H, 111H) ist eine Gleichspannung einspeisbar, die an die antennenseitigen Anschlüsse (111'a, 111'b, 111'c) durchgeschaltet wird, vorzugsweise nur an die antennenseitigen Anschlüsse (111'a, 111'b, 111'c), die mit einem DC-Verbraucher verbunden sind.

8. Antennen-Übertragungs-Steuerungseinrichtung nach Anspruch 7, **dadurch gekennzeichnet, dass** an den antennenseitigen Anschlüssen (111'a) der Antennensystem-Multiplexer-Schaltung (11H, 111H) anstehende Signale bzw. Protokollsignale, zum Beispiel stromalarmierte Signale, in den HF-Speiseleitungs-seitigen Anschluss (39') insbesondere transparent einspeisbar sind, und zwar zusammen mit einem anschluss- und verbraucherabhängigen Protokoll, in dem u.a. eine Information auch über die gemessene Stromaufnahme an den antennenseitigen Anschlüssen (111'a, 111'b, 111'c) übertragbar ist.

9. Antennen-Übertragungs-Steuerungseinrichtung nach Anspruch 7 oder 8, **dadurch gekennzeichnet, dass** die an die antennenseitigen Anschlüssen (111'a, 111'b, 111'c) der Antennensystem-Multiplexer-Schaltung (11H, 111H) kommunizierten Protokolle bzw. Protokollsignale an dem HF-Speiseleitungs-seitigen Anschluss (39') gleichzeitig, zeitlich versetzt und/oder zeitlich verschachtelt, insbesondere in einem Zeitmultiplexverfahren, in einem Frequenzmultiplex-verfahren, in einem proprietären Modulationsvefahren oder in einer Kombination zumindest zweier der vorstehend genannten Verfahren einspeis- und/oder übertragbar sind.

10. Antennen-Übertragungs-Steuerungseinrichtung nach einem der Ansprüche 7 bis 9, **dadurch gekennzeichnet, dass** in der Antennensystem-Multiplexer-Schaltung (11H, 111H) unterschiedliche Protokolle, insbesondere zumindest ein oder mehrere AISG- und/oder ein oder mehrere 3GPP-Protokolle und/oder ein oder mehrere proprietäre Protokolle in ein davon abweichendes Protokoll umsetzbar und in den HF-Speiseleitungs-seitigen Anschluss (39') einspeisbar sind.

11. Antennen-Übertragungs-Steuerungseinrichtung nach einem der Ansprüche 7 bis 10, **dadurch gekennzeichnet, dass** die antennenseitig vorgesehenen Anschlüsse (111'a, 111'b, 111'c) der Antennensystem-Multiplexer-Schaltung (11H, 111H) vor Betriebsaufnahme spannungsfrei und hochohmig sind.

12. Antennen-Übertragungs-Steuerungseinrichtung nach einem der Ansprüche 7 bis 11, **dadurch gekennzeichnet, dass** die Antennensystem-Multiplexer-Schaltung (11H, 111H) so aufgebaut ist, dass die antennenseitig vorgesehenen Anschlüsse (111'a, 111'b, 111'c) in einem vorzugsweise konfigurierbaren Zeitintervall auf angeschlossenen Gleichstromverbrauch überprüfbar sind, und zwar im Hinblick auf deren Stromaufnahme.

13. Antennen-Übertragungs-Steuerungseinrichtung nach Anspruch 12, **dadurch gekennzeichnet, dass** die an dem HF-speiseleitungsseitigen Anschluss (39') der Antennensystem-Multiplexer-Schaltung (11H, 111H) anliegende Gleichspannung nur an denjenigen antennenseitigen Ausgang (111'a) oder nur an diejenigen antennenseitigen Ausgänge (111'a) der Antennensystem-Multiplexer-Schaltung (11H, 111H) durchschaltbar ist bzw. sind, an dem eine Gleichstrom verbrauchende Komponente angeschlossen ist bzw. an dem gleichstromverbrauchende Komponenten angeschlossen sind.

14. Antennen-Übertragungs-Steuerungseinrichtung nach Anspruch 13, **dadurch gekennzeichnet, dass** alle antennenseitigen Anschlüsse (111'a, 111'b, 111'c) der Antennensystem-Multiplexer-Schaltung (11H, 111H) kurzschlussfest sind.

15. Antennen-Übertragungs-Steuerungseinrichtung nach einem der Ansprüche 7 bis 14, **dadurch gekennzeichnet, dass** die Antennensystem-Multiplexer-Schaltung (11H, 111H) ein an ihren antennenseitigen Anschlüssen (111'a, 111'b, 111'c) anstehendes Protokollsignal und gegebenenfalls ein Anschluss- und/oder Verbraucher-abhängiges Protokollsignal, insbesondere ein HDLC-Frame-Netzprotokoll-Signal zusammenfasst und/oder konvertiert und an dem zugehörigen HF-speiseleitungsseitigen Anschluss (39') einspeist, wobei das anschluss- oder verbraucherabhängige Protokollsignal eine Information darüber enthält, an welchem bzw. an welchen der antennenseitigen Anschlüsse (111'a, 111'b, 111'c) ein stromalarmiertes Zustands- und/oder Fehlersignal anliegt und welcher Strom an den jeweiligen antennenseitigen Anschlüssen (111'a, 111'b, 111'c) gezogen wird.

16. Antennen-Übertragungs-Steuerungseinrichtung eine
, **dadurch gekennzeichnet, dass** mittels der Basisstation-Multiplexer-Schaltung (11L, 111L) nach einem der Ansprüche 1 bis 6 und der Antennensystem-Multiplexer-Schaltung (11H, 111H) nach einem der Ansprüche 7 bis 15 ein an ihrem HF-seitigen Anschluss (39; 39') anstehendes HDLC-Frame-Netzprotokoll-Signal bzw. mehrere an den HF-seitigen Anschluss (39; 39') anstehende HDLC-Frame-Netzprotokoll-Signale in einzelne Protokollsignale separier- und/oder konvertierbar und anschlusskonform an die unterschiedlichen basisstationsseitigen Anschlüsse (111a, 111b, 111c) bzw. an die antennenseitigen Anschlüsse (111'a, 111'b, 111'c) einspeisbar ist bzw. sind.

17. Antennen-Übertragungs-Steuerungseinrichtung nach einem der Ansprüche 1 bis 6,16 **dadurch gekennzeichnet, dass** an der Basisstation-Multiplexer-Schaltung (11L, 111L) zumindest eine weitere Schnittstelle (35) vorgesehen ist, worüber der betreffende Basisstation-Multiplexer-Schaltung (11L, 111L) ein Protokoll und/oder eine Gleichspannung zuführbar und/oder die Basisstation-Multiplexer-Schaltung (11L, 111L) konfigurierbar ist.

18. Antennen-Übertragungs-Steuerungseinrichtung nach einem der Ansprüche 1 bis 17, **dadurch gekennzeichnet, dass** die Basisstation-Multiplexer-Schaltung (11L, 111L) und/oder Antennensystem-Multiplexer-Schaltung (11H, 111H) zumindest eine weitere oder mehrere weitere Schnittstellen (111"a, 111"b, 111"c) aufweist, wobei jede der zumindest einen weiteren oder der mehreren weiteren Schnittstellen oder Anschlüsse (111"a, 111"b, 111"c) jeweils zu einem der Anschlüsse oder Schnittstellen (111'a, 111'b, 111'c) parallel geschaltet ist.

19. Antennenanlage, insbesondere Mobilfunk-Antennenanlage mit folgenden Merkmalen:
- mit zumindest zwei Basisstationen (BS1, BS2, BS3),
- mit zumindest zwei Antenneneinrichtungen (ANT1, ANT2, ANT3),
- mit zumindest einer HF-Speiseleitung (5; 5a; 5b), worüber die Sende- und/oder Empfangssignale zwischen der jeweiligen Basisstation (BS1, BS2, BS3) und der zugehörigen Antenneneinrichtung (ANT1, ANT2, ANT3) übermittelt werden, wobei die Antenneneinrichtung (ANT1, ANT2, ANT3) in zumindest einer Polarisationsebene empfangbar und/oder sendbar ist,
- mit zumindest einer Antennen-Komponente (17, 17.1, 17.2, 17.3), die zwischen der zumindest einen HF-Speiseleitung (5, 5a, 5b) und Strahlern in der zumindest einen zugehörigen Antenneneinrichtung (ANT1, ANT2, ANT3) geschaltet ist,
**gekennzeichnet durch** die folgenden weiteren Merkmale:
- die zumindest beiden Antenneneinrichtungen (ANT1, ANT2) werden über zumindest eine gemeinsame HF-Speiseleitung (5, 5a, 5b) gespeist,
- den zumindest beiden Basisstationen (BS1, BS2, BS3) ist eine Basisstation-Multiplexer-Schaltung (11L, 111L) nach zumindest einem der Ansprüche 1 bis 7 oder Anspruch 17 zugeordnet,
- die zumindest beiden Basisstationen (BS1, BS2, BS3) sind über jeweils eine Verbindungsleitung (5.1a, 5.2a, 5.3a; 5.1b, 5.2b, 5.3b) mit jeweils einem Eingang der Basisstation-Multiplexer-Schaltung (11L, 111L) verbunden,
- die Basisstation-Multiplexer-Schaltung (11L, 111L) ist über einen HF-speiseleitungsseitigen Anschluss (39) mit der zumindest einen HF-Speiseleitung (5, 5a, 5b) verbunden,
- antennenseitig ist zumindest eine weitere Antennensystem-Multiplexer-Schaltung (11H, 111H) nach zumindest einem der Ansprüche 8 bis 17 vorgesehen, die einen Anschluss (39') zur Verbindung mit der zumindest einen HF-Speiseleitung (5, 5a, 5b) aufweist,
- die antennenseitige Antennensystem-Multiplexer-Schaltung (11H, 111H) weist zumindest zwei antennenseitige Anschlüsse (111'a, 111'b, 111'c) auf, wobei der eine antennenseitige Anschluss (111'a) mit der einen Antenneneinrichtung (ANT1) oder mit einer dieser Antenneneinrichtung (ANT1) vorgeschalteten Antennen-Komponente (17; 17.1) und der zumindest eine weitere Anschluss (111'b) mit der weiteren Antenneneinrichtung (ANT2) oder mit einer dieser weiteren Antenneneinrichtung (ANT2) vorgeschalteten Antennen-Komponente (17; 17.2) verbunden ist,
- die Steuerung der Antenneneinrichtung (ANT1, ANT2, ANT3) oder der den Antenneneinrichtungen (ANT1, ANT2, ANT3) vorgeschalteten Antennen-Komponenten (17; 17.1, 17.2, 17.3) erfolgt Protokoll-gesteuert über die zumindest eine gemeinsame HF-Speiseleitung (5; 5a, 5b).

20. Antennenanlage nach Anspruch 19, **dadurch gekennzeichnet, dass** die von den Basisstationen (BS1, BS2, BS3) übermittelten Protokolle zwischen der Basisstation-Multiplexer-Schaltung (11L, 111L) und der Antennensystem-Multiplexer-Schaltung (11H, 111H) gleichzeitig, zeitlich versetzt und/oder zeitlich verschachtelt, insbesondere in einem Zeitmultiplexverfahren, in einem Frequenzmultiplex-Verfahren oder in einem proprietären Modulationsverfahren oder in einer Kombination aus zwei oder mehrerer der vorstehend genannten Verfahren übertragbar sind.

21. Antennenanlage nach Anspruch 19 oder 20, **dadurch gekennzeichnet, dass** von Seiten der Basisstationen (BS1, BS2, BS3) unterschiedliche Protokolle, insbesondere zumindest ein AISG- und/oder zumindest ein 3GPP-Protokoll und/oder zumindest ein proprietäres Protokoll in ein davon abweichendes Übertragungs-Protokoll umgesetzt werden, welches zwischen der Basisstation-Multiplexer-Schaltung (11L, 111L) und der Antennensystem-Multiplexer-Schaltung (11H, 111H) ausgetauscht und/oder übertragen wird.

22. Antennenanlage nach einem der Ansprüche 19 bis 21, **dadurch gekennzeichnet, dass** die jeweiligen zwischen der Basisstation-Multiplexer-Schaltung (11L, 111L) und der Antennensystem-Multiplexer-Schaltung (11H, 111H) ausgetauschten und/oder übertragenen Protokolle an die entsprechenden Antennen-Komponenten (17; 17.1, 17.2, 17.3) der Antenneneinrichtung (ANT1, ANT2, ANT3) in richtiger Zuordnung übertragen werden.

23. Antennenanlage nach einem der Ansprüche 19 bis 22, **dadurch gekennzeichnet, dass** die Leistungsaufnahmen bezüglich der Antennen-Komponenten (17; 17.1, 17.2, 17.3) in der Antennensystem-Multiplexer-Schaltung (11H, 111H) in ein Protokoll konvertiert werden, worüber an den basisstationsseitigen zugehörigen Anschlüssen der Basisstation-Multiplexer-Schaltung (11L, 111L) Leistungsaufnahmen simulierbar sind, die den tatsächlichen Leistungsaufnahmen der Antennen-Komponenten (17; 17.1, 17.2, 17.3) entsprechen.

24. Antennenanlage nach einem der Ansprüche 19 bis 23, **dadurch gekennzeichnet, dass** von zumindest einer der mehreren Basisstationen (BS1, BS2, BS3) eine Gleichspannung in die zumindest eine HF-Speiseleitung (5; 5a, 5b) über die zumindest eine Basisstation-Multiplexer-Schaltung (11L, 111L) eingespeist wird.

25. Antennenanlage nach einem der Ansprüche 19 bis 23, **dadurch gekennzeichnet, dass** bei von mehreren Basisstationen (BS1, BS2, BS3) bereit gestellten unterschiedlichen Gleichstromleistungen und/oder unterschiedlichen Gleichstromspannungen in der basisstationssseitig zugeordneten Basisstation-Multiplexer-Schaltung (11L, 111L) eine gemeinsame Gleichstromspannung zur Versorgung der antennenseitigen Antennen-Komponenten (17; 17.1, 17.2, 17.3) generierbar ist.

26. Antennenanlage nach einem der Ansprüche 19 bis 25, **dadurch gekennzeichnet, dass** zumindest zwei Speiseleitungen (5; 5a, 5b) vorgesehen sind, die basisstationssseitig jeweils mit einem Anschluss (39) einer separaten Basisstation-Multiplexer-Schaltung (11L, 111L) oder eine Doppel-Basisstation-Multiplexer-Schaltung (11L, 111L) mit zwei HF-Speiseleitungs-seitigen Anschlüssen (39) verbunden sind und dass antennenseitig an den HF-Speiseleitungen (5; 5a, 5b) zwei Antennensystem-Multiplexer-Schaltungen (11H, 111H) oder eine Doppel-Antennensystem-Multiplexer-Schaltung (11H, 111H) mit zwei HF-Speiseleitungs-seitigen Anschlüssen (39') vorgesehen ist bzw. sind, wobei die zumindest eine Antenneneinrichtung (ANT1, ANT2, ANT3) in zwei Polarisationsebenen sendet und/oder empfängt und zumindest eine zugehörige Basisstation (BS1, BS2, BS3) zum Übertragen von Sendesignalen und/oder zum Empfangen von Empfangssignalen in zwei Polarisationsebenen eingerichtet ist.

27. Antennenanlage nach einem der Ansprüche 19 bis 26, **dadurch gekennzeichnet, dass** die an den antennenseitigen Anschlüssen (111'a, 111'b, 111'c) auftretenden unterschiedlichen Stromaufnahmen über die gemeinsame HF-Speiseleitung (5a, 5b) an dem jeweiligen zuordnungsrichtigen basisstationsseitigen Anschluss (111a, 111b, 111c) der Basisstation-Multiplexer-Schaltung (11L, 111L) abbildbar bzw. dort simulierbar und/oder einstellbar ist, an dem die Basisstation (BS1, BS2, BS3) angeschlossen ist, die mit der zugehörigen Antenneneinrichtung (ANT1, ANT2, ANT3) bzw. den zugeordneten Mobilfunk-Komponenten (17.1, 17.2. 17.3) kommuniziert, von denen das stromalarmierte oder protokollalarmierte Zustands- und/ oder Fehlersignal empfangen wird.

## Claims

1. Antenna transmission control device, with the following features:
- a base-station multiplexer circuit (11 L, 111 L) is provided,
- the base-station multiplexer circuit (11L, 111 L) has a plurality of base-station-side HF terminals (111 a, 111 b, 111 c),
- the base-station multiplexer circuit (11L, 111 L) has at least one HF feed line terminal (39),
**characterised by** the following features:
- the base-station multiplexer circuit (11 L, 111 L) has a scanning device (37) by means of which the base-station-side terminals (111a, 111b, 111c) can be scanned, one after another or simultaneously, and the protocol signals present at the base-station-side terminals (111 a, 111b, 111 c) can be detected, which can be supplied to the terminal (39) on the HF feed line side as protocol signals and/or transmission protocol,
- the base-station multiplexer circuit (11 L, 111 L) is constructed in such a way that the protocol signals present at the at least one HF feed line terminal (39) and/or the transmission protocol present there can be separated or converted into different individual protocols which can be supplied to the respectively associated base-station-side terminals (111 a, 111 b, 111c), and
- at at least one base-station-side terminal (111a, 111b, 111c) of the base-station multiplexer circuit (11 L, 111 L), a DC voltage can be supplied which is connected to the terminal (39) on the HF feed line side of the base-station multiplexer circuit (11 L, 111 L).

2. Antenna transmission control device according to claim 1, **characterised in that** the protocols or protocol signals detected at the base-station-side terminals (111 a, 111b, 111 c) of the base-station multiplexer circuit (11 L, 111 L) can be supplied and/or transmitted to the at least one terminal (39) on the HF feed line side simultaneously, in a time-shifted manner and/or in a time-shared manner, in particular by time division multiplexing, by frequency multiplexing, by another modulation method such as a proprietary modulation method, or by a combination of two or more of the aforementioned methods.

3. Antenna transmission control device according to either claim 1 or claim 2, **characterised in that** by means of the scanner device (37) in the base-station multiplexer circuit (11 L, 111 L), various protocols, in particular at least one or more AISG and/or one or more 3GPP protocols, can be detected and converted into for example a different transmission protocol, in particular an HDLC frame network protocol signal, and supplied to the terminal (39) on the HF feed line side.

4. Antenna transmission control device according to any one of claims 1 to 3, **characterised in that** the base-station multiplexer circuit (11 L, 111 L) is constructed in such a way that, of a plurality of different DC voltages which are present at a plurality of base-station-side terminals (111 a, 111 b, 111 c), it is possible for a single DC voltage produced from these to be produced via transformation and to be supplied to the terminal (39) on the HF feed line side.

5. Antenna transmission control device according to any one of claims 1 to 4, **characterised in that** the base-station-side terminals (111a, 111b, 111c) of the base-station multiplexer circuit (11 L, 111 L) are high-resistance before operation begins.

6. Antenna transmission control device according to any one of claims 1 to 5, **characterised in that** a DC and/or voltage state change at the at least one HF feed line terminal (39) is adjusted and/or simulated at the correctly associated base-station-side terminal or the respectively correctly associated base-station-side terminals (111a, 111b, 111 c) depending on a load which can be connected to the at least one HF feed line terminal (39).

7. Antenna transmission control device, with the following features:
- an antenna-system multiplexer circuit (11H, 111H) is provided,
- the antenna-system multiplexer circuit (11H, 111H) comprises at least one HF feed line terminal (39'),
- the antenna-system multiplexer circuit (11H, 111H) comprises a plurality of antenna-side HF terminals (111'a, 111'b, 111'c),
**characterised by** the following features:
- the antenna-system multiplexer circuit (11H, 111H) comprises a converter circuit, via which the protocol signals and/or the transmission protocol present at the terminal (39') on the HF feed line side can be converted and/or separated into individual protocols which can be supplied to the respectively associated antenna-side terminals (111'b, 111'c) to which protocol-controlled antenna components (17.2, 17.3) can be connected, and
- by means of the converter circuit, the signals or individual protocols present at the antenna-side terminals (111'b, 111'c) as protocol signals and/or as a combined and/or converted transmission protocol, can be supplied to the terminal (39') on the HF feed line side, and
- a DC voltage can be supplied at the terminal (39') on the HF feed line side of the antenna-system multiplexer circuit (11H, 111H), which is connected to the antenna-side terminals (111'a, 111'b, 111'c), preferably only to the antenna-side terminals (111'a, 111'b, 111'c) which are connected to a DC load.

8. Antenna transmission control device according to claim 7, **characterised in that** signals or protocol signals, for example current-alarmed signals, present at the antenna-side terminals (111'a) of the antenna-system multiplexer circuit (11H, 111H) can be supplied to the terminal (39') on the HF feed line side, in particular transparently, specifically together with a terminal-dependent and load-dependent protocol in which, *inter alia,* information also relating to the measured current uptake at the antenna-side terminals (111'a, 111'b, 111'c) can be transmitted.

9. Antenna transmission control device according to either claim 7 or claim 8, **characterised in that** the protocols or protocol signals communicated to the antenna-side terminals (111'a, 111'b, 111'c) of the antenna-system multiplexer circuit (11H, 111H) can be supplied and/or transmitted to the terminal (39') on the HF feed line side simultaneously, in a time-shifted manner and/or in a time-shared manner, in particular by time division multiplexing, by frequency multiplexing, by a proprietary modulation method, or by a combination of at least two of the aforementioned methods.

10. Antenna transmission control device according to any one of claims 7 to 9, **characterised in that** in the antenna-system multiplexer circuit (11H, 111H), various protocols, in particular at least one or more AISG and/or one or more 3GPP protocols and/or one or more proprietary protocols, can be converted into a different protocol and supplied to the terminal (39') on the HF feed line side.

11. Antenna transmission control device according to any one of claims 7 to 10, **characterised in that** the antenna-side terminals (111'a, 111'b, 111'c) of the antenna-system multiplexer circuit (11H, 111H) are voltage-free and high-resistance before operation begins.

12. Antenna transmission control device according to any one of claims 7 to 11, **characterised in that** the antenna-system multiplexer circuit (11H, 111H) is constructed in such a way that the terminals (111'a, 111'b, 111'c) provided on the antenna side can be checked for the connected direct current consumption at a preferably configurable time-interval, specifically as regards the current uptake thereof.

13. Antenna transmission control device according to claim 12, **characterised in that** the DC voltage present at the terminal (39'), on the HF feed line side, of the antenna-system multiplexer circuit (11H, 111H) can only be connected to the antenna-side terminal (111'a) of the antenna-system multiplexer circuit (11H, 111H) or terminals (111'a) to which a DC-consuming component or DC-consuming components is/are connected.

14. Antenna transmission control device according to claim 13, **characterised in that** all of the antenna-side terminals (111'a, 111'b, 111'c) of the antenna-system multiplexer circuit (11H, 111H) are short-circuit-resistant.

15. Antenna transmission control device according to any one of claims 7 to 14, **characterised in that** the antenna-system multiplexer circuit (11H, 111H) combines and/or converts a protocol signal, present at the antenna-side terminals (111'a, 111'b, 111'c) thereof, and optionally a terminal-dependent and/or load-dependent protocol signal, in particular an HDLC-frame network protocol signal, and supplies said signal or signals to the associated terminal (39') on the HF feed line side, the terminal-dependent and/or load-dependent protocol signal containing information as to at which one or ones of the antenna-side terminals (111'a, 111'b, 111'c) a current-alarmed state and/or fault signal is present and what current is being taken up at the respective antenna-side terminals (111'a, 111'b, 111'c).

16. Antenna transmission control device, **characterised in that** by means of the base-station multiplexer circuit (11 L, 111 L) according to any one of claims 1 to 6 and the antenna-system multiplexer circuit (11H, 111H) according to any one of claims 7 to 15 an HDLC-frame network protocol signal present at the HF-side terminal (39; 39') thereof or a plurality of HDLC-frame network protocol signals present at the HF-side terminal (39; 39') can be separated and/or converted into individual protocol signals and fed in conformance with the terminals to the various base-station-side terminals (111a, 111b, 111c) or to the antenna-side terminals (111'a, 111'b, 111'c).

17. Antenna transmission control device according to any one of claims 1 to 6 and 16, **characterised in that**, at the base-station multiplexer circuit (11 L, 111 L), at least one further interface (35) is provided, via which a protocol and/or a DC voltage can be supplied to the relevant base-station multiplexer circuit (11 L, 111 L) and/or the base-station multiplexer circuit (11L, 111L) can be configured.

18. Antenna transmission control device according to any one of claims 1 to 17, **characterised in that** the base-station multiplexer circuit (11 L, 111 L) and/or antenna-system multiplexer circuit (11H, 111H) comprises at least one further or a plurality of further interfaces (111 "a, 111 "b, 111 "c), each of the at least one further or the plurality of further interfaces or terminals (111"a, 111"b, 111"c) respectively being connected in parallel with one of the terminals or interfaces (111'a, 111'b, 111'c).

19. Antenna system, in particular mobile communication antenna system, with the following features:
- at least two base stations (BS1, BS2, BS3),
- at least two antenna devices (ANT1, ANT2, ANT3),
- at least one HF feed line (5; 5a; 5b), via which the transmission and/or reception signals are transmitted between the respective base stations (BS1, BS2, BS3) and the associated antenna device (ANT1, ANT2, ANT3), the antenna device (ANT1, ANT2, ANT3) being able to be received and/or transmitted in at least one polarisation plane,
- at least one antenna component (17, 17.1, 17.2, 17.3), which is switched between the at least one HF feed line (5, 5a, 5b) and radiators in the at least one associated antenna device (ANT1, ANT2, ANT3),
**characterised by** the following further features:
- the at least two antenna devices (ANT1, ANT2) are supplied via at least one common HF feed line (5, 5a, 5b),
- a base-station multiplexer circuit (11 L, 111 L) according to at least one of claims 1 to 7 or claim 17 is associated with the at least two base stations (BS1, BS2, BS3),
- the at least two base stations (BS1, BS2, BS3) are connected via a respective connection line (5.1 a, 5.2a, 5.3a; 5.1 b, 5.2b, 5.3b) to a respective input of the base-station multiplexer circuit (11 L, 111 L),
- the base-station multiplexer circuit (11 L, 111 L) is connected via a terminal (39) on the HF feed line side to the at least one HF feed line (5, 5a, 5b),
- on the antenna side, at least one further antenna-system multiplexer circuit (11H, 111H) according to at least one of claims 8 to 17 is provided and comprises a terminal (39') for connection to the at least one HF feed line (5, 5a, 5b),
- the antenna-side antenna-system multiplexer circuit (11H, 111H) comprises at least two antenna-side terminals (111'a, 111'b, 111'c), one antenna-side terminal (111'a) being connected to one antenna device (ANT1) or an antenna component (17; 17.1) connected upstream from this antenna device (ANT1) and the at least one further terminal (111'b) being connected to the further antenna device (ANT2) or to an antenna component (17; 17.2) connected upstream from this further antenna device (ANT2),
- the control of the antenna device (ANT1, ANT2, ANT3) or the antenna components (17; 17.1, 17.2, 17.3) upstream from the antenna devices (ANT1, ANT2, ANT3) is controlled by protocol via the at least one common HF feed line (5; 5a, 5b).

20. Antenna system according to claim 19, **characterised in that** the protocols transmitted by the base stations (BS1, BS2, BS3) can be transferred between the base-station multiplexer circuit (11 L, 111 L) and the antenna-system multiplexer circuit (11H, 111H) simultaneously, in a time-shifted manner and/or in a time-shared manner, in particular by time division multiplexing, by frequency multiplexing, or by a proprietary modulation method, or by a combination of two or more of the aforementioned methods.

21. Antenna system according to either claim 19 or claim 20, **characterised in that** various protocols, in particular at least one AISG and/or at least one 3GPP protocol and/or at least one proprietary protocol, can be converted at the base stations (BS1, BS2, BS3) into a different transmission protocol, which is exchanged and/or transmitted between the base-station multiplexer circuit (11 L, 111 L) and the antenna-system multiplexer circuit (11H, 111H).

22. Antenna system according to any one of claims 19 to 21, **characterised in that** the respective protocols exchanged and/or transmitted between the base-station multiplexer circuit (11 L, 111 L) and the antenna-system multiplexer circuit (11H, 111H) are transmitted to the corresponding antenna components (17; 17.1, 17.2, 17.3) of the antenna device (ANT1, ANT2, ANT3) with the correct association.

23. Antenna system according to any one of claims 19 to 22, **characterised in that** the power uptakes of the antenna components (17; 17.1, 17.2, 17.3) are converted in the antenna-system multiplexer circuit (11H, 111H) into a protocol via which, at the base-station-side associated terminals of the base-station multiplexer circuit (11 L, 111 L), power uptakes corresponding to the actual power uptakes of the antenna components (17; 17.1, 17.2, 17.3) can be simulated.

24. Antenna system according to any one of claims 19 to 23, **characterised in that** a DC voltage is fed from at least one of the plurality of base stations (BS1, BS2, BS3) to the at least one HF feed line (5; 5a, 5b) via the at least one base-station multiplexer circuit (11L, 111L).

25. Antenna system according to any one of claims 19 to 23, **characterised in that**, in the case of different DC power and/or different DC voltages provided by a plurality of base stations (BS1, BS2, BS3), a common DC voltage for supplying the antenna-side antenna components (17; 17.1, 17.2, 17.3) can be generated in the base-station multiplexer circuit (11L, 111L) associated on the base station side.

26. Antenna system according to any one of claims 19 to 25, **characterised in that** at least two feed lines (5; 5a, 5b) are provided and are each connected on the base station side to a terminal (39) of a separate base-station multiplexer circuit (11L, 111L) or to a double base-station multiplexer circuit with two terminals (39) on the HF feed line side, and **in that**, on the antenna side, two antenna-system multiplexer circuits (11H, 111H) or one double antenna-system multiplexer circuit (11H, 111H) with two terminals (39') on the HF feed line side is/are provided on the HF feed lines (5; 5a, 5b), the at least one antenna device (ANT1, ANT2, ANT3) transmitting and/or receiving in two polarisation planes and at least one associated base station (BS1, BS2, BS3) being set up so as to transmit transmission signals and/or to receive reception signals in two polarisation planes.

27. Antenna system according to any one of claims 19 to 26, **characterised in that** the different current uptakes present at the antenna-side terminals (111'a, 111'b, 111'c) can be represented via the common HF feed line (5a, 5b) on the respective correctly associated base-station-side terminal (111a, 111b, 111c) of the base-station multiplexer circuit (11L, 111L) or simulated and/or adjusted there, the base station (BS1, BS2, BS3) being connected to said multiplexer circuit and communicating with the associated antenna device (ANT1, ANT2, ANT3) or the associated mobile communication components (17.1, 17.2, 17.3) from which the current-alarmed or protocol-alarmed state and/or fault signal is received.

## Revendications

1. Système de commande de transmission par antenne comprenant les éléments suivants :
- il est prévu un circuit multiplexeur de station de base (11L, 111L),
- le circuit multiplexeur de station de base (11L, 111L) comporte plusieurs raccords HF du côté de la station de base (111a, 111b, 111c),
- le circuit multiplexeur de station de base (11L, 111L) comporte au moins un raccord de ligne d'alimentation HF (39),
**caractérisé par** les caractéristiques suivantes :
- le circuit multiplexeur de station de base (11L, 111L) comprend un système scanner (37) au moyen duquel les raccords (11a, 111b, 111c) du côté de la station de base peuvent être scannés les uns après les autres ou simultanément et les signaux de protocole appliqués aux raccords (111a, 111b, 111c) du côté de la station de base peuvent être détectés, lesquels peuvent être injectés dans le raccord (39) du côté de la ligne d'alimentation HF à titre de signaux de protocole et/ou de protocole de transmission,
- le circuit multiplexeur de station de base (11L, 111L) est réalisé de telle façon que les signaux de protocole apparaissant audit au moins un raccord de ligne d'alimentation HF (39) et/ou le protocole de transmission apparaissant à ce raccord peuvent être séparés ou convertis en protocoles individuels différents, qui peuvent être injectés dans les raccords associés respectifs (111a, 111b, 111c) du côté de la station de base, et
- au niveau d'au moins un raccord (111a, 111 b, 111 c) du côté de la station de base dans le circuit multiplexeur de station de base (11L, 111L) peut être injectée une tension continue qui est transférée aux raccords (39) du côté de la ligne d'alimentation HF dans le circuit multiplexeur de station de base (11L, 111L).

2. Système de commande de transmission par antenne selon la revendication 1, **caractérisé en ce que** les protocoles ou les signaux de protocole détectés au niveau des raccords (111a, 111b, 111c) du côté de la station de base dans le circuit multiplexeur de station de base (11L, 111L) peuvent être injectés dans ledit au moins un raccord (39) du côté de la ligne d'alimentation HF ou être transmis via celle-ci, et ceci simultanément, de façon décalée dans le temps et/ou de façon imbriquée dans le temps, en particulier dans un procédé par multiplex temporel, dans un procédé multiplex en fréquence, dans un autre procédé de modulation, comme par exemple un procédé de modulation propriétaire ou dans une combinaison de deux ou plusieurs des procédés mentionnés ci-dessus.

3. Système de commande de transmission par antenne selon la revendication 1 ou 2, **caractérisé en ce que**, au moyen du système scanner (37) dans le circuit multiplexeur de station de base (11L, 111L), il est possible de détecter des protocoles différents, en particulier au moins un ou plusieurs protocoles AISG et/ou un ou plusieurs protocoles 3GPP, et les convertir dans un protocole de transmission différent de ceux-ci, en particulier un signal de protocole de réseau à trame HDLC, et les injecter dans le raccord (39) du côté de la ligne d'alimentation HF.

4. Système de commande de transmission par antenne selon l'une des revendications 1 à 3, **caractérisé en ce que** le circuit multiplexeur de station de base (11L, 111L) est réalisé de telle façon qu'à partir de plusieurs tensions continues différentes, qui sont appliquées à plusieurs raccords (111a, 111b, 111c) du côté de la station de base, on engendre une tension continue engendrée à partir de celles-ci par transformation et peut être injecté au niveau du raccord (39) du côté de la ligne d'alimentation HF.

5. Système de commande de transmission par antenne selon l'une des revendications 1 à 4, **caractérisé en ce que** les raccords (111a, 111b, 111c) du côté de la station de base dans le circuit multiplexeur de station de base (11L, 111L) présentent une haute résistance avant le commencement du fonctionnement.

6. Système de commande de transmission par antenne selon l'une des revendications 1 à 5, **caractérisé en ce qu'**il est possible d'établir et/ou de simuler une variation d'état de courant continu et/ou de tension présente au niveau dudit au moins un raccord de ligne d'alimentation HF (39) en fonction d'un utilisateur à raccorder audit au moins un raccord de ligne d'alimentation HF (39) au niveau du raccord correctement associé du côté de la station de base ou au niveau des raccords respectifs correctement associés du côté de la station de base (111a, 111b, 111c).

7. Système de commande de transmission par antenne comprenant les éléments suivants :
- il est prévu un circuit multiplexeur de système d'antenne (11H, 111H),
- le circuit multiplexeur de système d'antenne (11H, 111H) comprend au moins un raccord de ligne d'alimentation HF (39'),
- le circuit multiplexeur de système d'antenne (11H, 111H) comprend plusieurs raccords HF du côté antenne (111'a, 111'b, 111'c),
**caractérisé par** les caractéristiques suivantes :
- le circuit multiplexeur de système d'antenne (11H, 111H) comprend un circuit convertisseur par lequel les signaux de protocole apparaissant au niveau du raccord du côté de la ligne d'alimentation HR (39') et/ou le protocole de transmission apparaissant à ce raccord peuvent être convertis et/ou séparés en protocoles individuels différents, qui peuvent être injectés dans les raccords (111'b, 11'c) respectivement associés du côté antenne, auxquels peuvent être raccordés des composants d'antenne (17.2, 17.3) commandés par protocole, et
- au moyen du circuit convertisseur, les signaux ou les protocoles individuels apparaissant au niveau des raccords côté antenne (111'b, 111'c) peuvent être injectés dans le raccord du côté de la ligne d'alimentation HF (39') à titre de signaux de protocole et/ou à titre de protocole de transmission groupé(s) et/ou converti(s), et
- au niveau du raccord du côté de la ligne d'alimentation HF (39') dans le circuit multiplexeur de système d'antenne (11H, 111H), il est possible d'injecter une tension continue, qui est transférée au niveau des raccords côté antenne (111'a, 111'b, 111'c), et de préférence uniquement aux raccords du côté antenne (111'a, 111'b, 111'c) qui sont reliés à un utilisateur de courant continu.

8. Système de commande de transmission par antenne selon la revendication 7, **caractérisé en ce que** les signaux ou les signaux de protocole apparaissant au niveau des raccords du côté antenne (111'a) dans le circuit multiplexeur de système d'antenne (11H, 111H), par exemple des signaux d'alarme de courant, peuvent être injectés dans le raccord (39') du côté de la ligne d'alimentation HF, en particulier de façon transparente, et ceci conjointement avec un protocole indépendant du raccord et indépendant de l'utilisateur, protocole dans lequel peut être transmise, entre autres, une information également sur la consommation de courant mesurée au niveau des raccords côté antenne (111'a, 111'b, 111'c)

9. Système de commande de transmission par antenne selon la revendication 7 ou 8, **caractérisé en ce que** les protocoles ou les signaux de protocole communiqués au niveau des raccords côté antenne (111'a, 111'b, 111'c) dans le circuit multiplexeur de système d'antenne (11H, 111H), peuvent être injectés et/ou transmis au niveau du raccord du côté de la ligne d'alimentation HF (39') simultanément, de façon décalée dans le temps et/ou imbriquée dans le temps, en particulier dans un procédé par multiplex temporel, dans un procédé par multiplex en fréquence, dans un procédé de modulation propriétaire ou dans une combinaison d'au moins deux des procédés mentionnés ci-dessus.

10. Système de commande de transmission par antenne selon l'une des revendications 7 à 9, **caractérisé en ce que** dans le circuit multiplexeur de système d'antenne (11H, 111H), il est possible de convertir des protocoles différents, en particulier au moins un ou plusieurs protocoles AISG et/ou un ou plusieurs protocoles 3GPP et/ou un ou plusieurs protocoles propriétaires en un protocole différent de ceux-ci, et de l'injecter dans le raccord du côté de la ligne d'alimentation HF (39').

11. Système de commande de transmission par antenne selon l'une des revendications 7 à 10, **caractérisé en ce que** les raccords prévus du côté antenne (111'a, 11'b, 11'c) du circuit multiplexeur de système d'antenne (11H, 111H) sont hors tension et présentent une haute résistance avant le commencement du fonctionnement.

12. Système de commande de transmission par antenne selon l'une des revendications 1 à 11, **caractérisé en ce que** le circuit multiplexeur de système d'antenne (11H, 111H) est réalisé de telle façon que les raccords (111'a, 100'b, 111'c) prévus du côté antenne peuvent être vérifiés vis-à-vis de la consommation en courant continu des appareils branchés, dans un intervalle temporel qu'il est de préférence possible de configurer, et ceci pour ce qui concerne leur consommation de courant.

13. Système de commande de transmission par antenne selon la revendication 12, **caractérisé en ce que** la tension continue appliquée
aux raccords (39') du côté de la ligne d'alimentation HF dans le circuit multiplexeur de système d'antenne (11H, 111H) peut être transférée uniquement à la sortie du côté antenne (111'a) ou uniquement aux sorties du côté antenne (111'a) dans le circuit multiplexeur de système d'antenne (11H, 111H) à laquelle est raccordé un composant consommateur de courant continu, ou auxquelles sont raccordés des composants consommateurs de courant continu.

14. Système de commande de transmission par antenne selon la revendication 13, **caractérisé en ce que** tous les raccords côté antenne (111'a, 111'b, 111'c) du circuit multiplexeur de système d'antenne (11H, 111H) sont résistants vis-à-vis des courts-circuits.

15. Système de commande de transmission par antenne selon l'une des revendications 7 à 14, **caractérisé en ce que** le circuit multiplexeur de système d'antenne (11H, 111H) regroupe et/ou convertit un signal de protocole apparaissant au niveau de ses raccords du côté antenne (111'a, 111'b, 111'c) et le cas échéant un signal de protocole dépendant du raccord et/ou de l'utilisateur, en particulier un signal de protocole de réseau à trame HDLC, et l'injecte au niveau du raccord associé (39') du côté de la ligne d'alimentation HF, et le signal de protocole dépendant du raccord ou de l'utilisateur contient une information concernant celui ou ceux des raccords du côté antenne (111'a, 111'b, 111'c) auquel est appliqué un signal d'état et/ou d'erreur sous l'alarme d'un courant, et quel courant est appelé aux raccords respectifs du côté antenne (111'a, 111'b, 111'c).

16. Système de commande de transmission par antenne, **caractérisé en ce qu'**au moyen du circuit multiplexeur de station de base (11L, 111L) selon l'une des revendications 1 à 6, et du circuit multiplexeur de système d'antenne (11H, 111H) selon l'une des revendications 7 à 15, il est possible de séparer est/ou de convertir un signal de protocole de réseau à trame HDLC apparaissant au niveau de son raccord du côté HF (39 ; 39') ou plusieurs signaux de protocole de réseau à trame HDLC apparaissant au niveau de leurs raccords du côté HF (39 ; 39') en signaux de protocole individuels, et les injecter de manière conforme au raccord vers les différents raccords du côté de la station de base (111a, 111b, 111c) ou respectivement vers les raccords du côté antenne (111'a, 111'b, 111'c).

17. Système de commande de transmission par antenne selon l'une des revendications 1 à 6 ou 16, **caractérisé en ce qu'**au niveau du circuit multiplexeur de station de base (11L, 111L) il est prévu au moins une autre interface (35) au moyen de laquelle un protocole et/ou une tension continue peut être amené(e) au circuit et multiplexeur de station de base concerné (11L, 111L), et/ou le circuit multiplexeur de station de base (11L, 111L) peut être configuré.

18. Système de commande de transmission par antenne selon l'une des revendications 1 à 17, **caractérisé en ce que** le circuit multiplexeur de station de base (11L, 111L) et/ou le circuit multiplexeur de système d'antenne (11H, 111H) comprend au moins une ou plusieurs autres interfaces (111"a, 111"b, 111"c), et chacune desdites au moins une ou plusieurs autres interfaces ou desdits au moins un ou plusieurs autres raccords (111"a, 111"b, 111"c) est branché(e) en série respectivement à l'un des raccords ou l'une des interfaces (111'a, 111'b, 111'c).

19. Installation d'antenne, en particulier installation d'antenne pour radiotéléphonie mobile, comprenant les éléments suivants :
- elle comprend au moins deux stations de base (BS1, BS2, BS3),
- elle comprend au moins deux systèmes d'antenne (ANT1, ANT2, ANT3),
- elle comprend au moins une ligne d'alimentation HF (5 ; 5a ; 5b), via laquelle les signaux émis et/ou les signaux reçus sont transmis entre la station de base respective (BS1, BS1, BS3) et le système d'antenne associée (ANT1, ANT2, ANT3), et le système d'antenne (ANT1, ANT2, ANT3) est capable de recevoir et/ou d'émettre dans au moins un plan de polarisation,
- elle comprend au moins un composant d'antenne (17, 17.1, 17.2, 17.3) qui est branché entre ladite au moins une ligne d'alimentation HF (5, 5a, 5b) et les éléments rayonneurs dans ledit au moins un système d'antenne associé (ANT2 , ANT2, ANT3),
**caractérisée par** les caractéristiques suivantes :
- lesdits au moins deux systèmes d'antenne (ANT1, ANT2) sont alimentés via au moins une ligne d'alimentation HF commune (5, 5a, 5b),
- un circuit multiplexeur de station de base (11L, 111L) selon l'une au moins des revendications 1 à 7 ou selon la revendication 17 est associé auxdites au moins deux stations de base (BS1, BS2, BS3),
- lesdites au moins deux stations de base (BS1, BS2, BS3) sont reliées via une ligne de liaison (5.1a, 5.2a, 5.3a ; 5.1b, 5.2b, 5.3b) à une entrée respective du circuit multiplexeur de station de base (11L, 111L),
- le circuit multiplexeur de station de base (11L, 111L) est relié via un raccord (39) du côté de la ligne d'alimentation avec ladite au moins une ligne d'alimentation HF (5, 5a, 5b),
- du côté antenne, il est prévu au moins un autre le circuit multiplexeur de système d'antenne (11H, 111H) selon l'une au moins des revendications 8 à 17, qui comprend un raccord (39') pour la liaison avec ladite au moins une ligne d'alimentation HF (5, 5a, 5b),
- le circuit multiplexeur de système d'antenne (11H, 111H) du côté antenne comprend au moins deux raccords côté antenne (111'a, 111'b, 111'c), de sorte que l'un des raccords côté antenne (111'a) est relié à l'un des systèmes d'antenne (ANT1) ou avec un composant d'antenne (17 ; 17.1) branché en amont de ce système d'antenne (ANT1), et ledit au moins un autre raccord (111'b) est relié à l'autre système d'antenne (ANT2) ou à un composant d'antenne (17 ; 17.2) branché en amont de cet autre système d'antenne (ANT2,
- la commande du système d'antenne (ANT1, ANT2, ANT3), ou du composant d'antenne (17 ; 17.1, 17.2, 17.3) branché en amont des systèmes d'antenne (ANT1, ANT2, ANT3) a lieu sous la commande d'un protocole via ladite au moins une ligne d'alimentation HF commune (5 ; 5a, 5b).

20. Installation d'antenne selon la revendication 19, **caractérisée en ce que** les protocoles transmis depuis les stations de base (BS1, BS2, BS3) sont susceptibles d'être le transmis entre le circuit multiplexeur de station de base (11L, 111L) et le circuit multiplexeur de système d'antenne (11H, 111H) simultanément, de façon décalée dans le temps et/ou imbriquée dans le temps, en particulier dans un procédé multiplex temporel, dans un procédé multiplex en fréquence ou dans un procédé de modulation propriétaire, ou dans une combinaison de deux ou plusieurs des procédés cités ci-dessus.

21. Installation d'antenne selon la revendication 19 ou 20, **caractérisée en ce que**, du côté des stations de base (BS1, BS2, BS3), différents protocoles, en particulier au moins un protocole AISG et/ou au moins un protocole 3GPP et/ou au moins un protocole propriétaire, peuvent être convertis en un protocole de transmission différent de ceux-ci, lequel est échangé et/ou transmis entre le circuit multiplexeur de station de base (11L, 111L) et le circuit multiplexeur de système d'antenne (11H, 111H).

22. Installation d'antenne selon l'une des revendications 19 à 21, **caractérisée en ce que** les protocoles respectifs échangés et/ou transmis entre le circuit multiplexeur de station de base (11L, 111L) et le circuit multiplexeur de système d'antenne (11H, 111H) sont transmis suivant une association correcte aux composants d'antenne correspondants (17 ; 17.1, 17.2, 17.3) du système d'antenne (ANT1, ANT2, ANT3).

23. Installation d'antenne selon l'une des revendications 19 à 22, **caractérisée en ce que** les consommations de puissance sont converties par référence aux composants d'antenne (17 ; 17.1, 17.2, 17.3) dans le circuit multiplexeur de système d'antenne (11H, 111H) dans un protocole au moyen duquel des consommations de puissance au niveau des raccords associés du côté station de base dans le circuit multiplexeur de station de base (11L, 111L) peuvent être simulées, qui correspondent au consommations de puissance effective des composants d'antenne (17 ; 17.1, 17.2, 17.3).

24. Installation d'antenne selon l'une des revendications 19 à 23, **caractérisée en ce que** depuis l'une au moins des plusieurs stations de base (BS1, BS2, BS3), une tension continue est injectée dans ladite au moins une ligne d'alimentation HF (5 ; 5a, 5b) via ledit au moins un circuit multiplexeur de station de base (11L, 111L).

25. Installation d'antenne selon l'une des revendications 19 à 23, **caractérisée en ce que**, dans le cas où différentes puissances en courant continu sont préparées par plusieurs stations de base (BS1, BS2, BS3) et/ou différentes tensions en courant continu sont préparées dans le circuit multiplexeur de station de base associé du côté station de base (11L, 111L), une tension continue commune est susceptible d'être générée pour l'alimentation des composants d'antenne (17 ; 17.1, 17.2, 17.3) du côté antenne.

26. Installation d'antenne selon l'une des revendications 19 à 25, **caractérisée en ce qu'**il est prévu au moins deux lignes d'alimentation (5 ; 5a, 5b), qui sont respectivement reliées, du côté station de base, à un raccord (39) d'un circuit multiplexeur de station de base (11L, 111L) séparé, ou un circuit multiplexeur de station de base double (11L, 111L) est relié à deux raccords (39) du côté de la ligne d'alimentation HF, et **en ce qu'**il est prévu, du côté antenne, au niveau des lignes d'alimentation HF (5 ; 5a, 5b), deux circuits multiplexeurs de système d'antenne (11H, 111H), ou un circuit multiplexeur de système d'antenne double (11H, 111H) avec deux raccords (39') du côté de la ligne d'alimentation HF, et ledit au moins un système d'antenne (ANT1, ANT2, ANT3) émet et/ou reçoit dans le plan de polarisation, et au moins une station de base associée (BS1, BS2, BS3) est conçue pour transmettre des signaux émis et/ou pour recevoir des signaux reçus dans le plan de polarisation.

27. Installation d'antenne selon l'une des revendications 19 à 26, **caractérisée en ce que** les consommations de courant différentes qui se produisent au niveau des raccords côté antenne (111'a, 111'b, 111'c) peuvent être imagés ou simulés et/ou réglés via la ligne d'alimentation HF commune (5a, 5b) au niveau du raccord respectif (111a, 111b, 111c) correctement associé du côté station de base, dans le circuit multiplexeur de station de base (11L, 111L), auquel est raccordée la station de base (BS1, BS2, BS3), qui communique avec le système d'antenne associé (ANT1, ANT2, ANT) ou respectivement avec les composants associés de radiotéléphonie mobile (17.1, 17.2, 17.3), par lesquels le signal d'état et/ou d'erreur mis en alarme par un courant ou mis en alarme par un protocole peut être reçu.
